# EUROPÄISCHE PATENTSCHRIFT

(11) **EP 4 450 268 B1**
(45) Veröffentlichungstag und Bekanntmachung des Hinweises auf die Patenterteilung: **03.12.2025**
(21) Anmeldenummer: 24169489.2
(22) Anmeldetag: 10.04.2024
(51) Int. Cl.: B29D 29/00, F16G 1/06, F16G 1/10, F16G 5/04, F16G 5/08, B65G 15/36, B29C 35/02, B29D 29/06, B29D 29/08, F16G 1/28, F16G 5/20

(54) **LÖSEMITTELFREIE, FUNKTIONALE BESCHICHTUNG VON FESTIGKEITSTRÄGERN FÜR ANTRIEBSRIEMEN ÜBER UV-LICHT INDUZIERTE VERNETZUNGSREAKTIONEN**
SOLVENT-FREE FUNCTIONAL COATING OF RIGIDITY SUPPORTS FOR DRIVE BELTS VIA UV-LIGHT-INDUCED CROSSLINKING REACTIONS
REVÊTEMENT FONCTIONNEL SANS SOLVANT DE SUPPORTS DE RÉSISTANCE POUR COURROIES DE TRANSMISSION PAR DES RÉACTIONS DE RÉTICULATION INDUITES PAR LA LUMIÈRE ULTRAVIOLETTE

(30) Priorität: 18.04.2023 DE 102023203511
(43) Veröffentlichungstag der Anmeldung: 23.10.2024
(73) Patentinhaber: ContiTech Deutschland GmbH, 30175 Hannover (DE)
(72) Erfinder: Dr. Jonczyk, Patrick, 30175 Hannover (DE); Mahnken, Claus-Lüder, 30175 Hannover (DE); Dr. Dikmans, Antonius, 30175 Hannover (DE)
(74) Vertreter: Preusser, Andrea

(56) Entgegenhaltungen:
- EP-B1- 0 688 973
- US-A1- 2012 309 573

## Beschreibung

Die Erfindung betrifft einen Elastomerartikel, insbesondere einen Antriebsriemen, der mindestens einen Festigkeitsträger aufweist, Verfahren zur Herstellung des Elastomerartikels mittels eines strahlungshärtbaren, bevorzugt UV-härtbaren Lacks und die entsprechende Verwendung des strahlungshärtbaren, bevorzugt UV-härtbaren Lacks.

Aus den Dokumenten US 2012/309573 A1 und EP 0 688 973 B1 ist ein Verfahren zur Herstellung eines Elastomerartikels bekannt, der einen Körper aus vulkanisiertem Gummi und mindestens ein Verstärkungselement umfasst, das aus einer Textilbahn und einem Zugstrang ausgewählt ist.

Antriebsriemen, wie Zahnriemen und Keilrippenriemen, sind gewöhnlich mit mindestens einem Festigkeitsträger, wie textilen Flächenkörpern und/oder Zugsträngen, ausgerüstet.

Der derzeitige Stand der Technik für die Beschichtung textiler Flächenkörper für Antriebsriemen sieht ein Isocyanat-basiertes, lösemittelhaltiges Zwei-Komponenten-System vor. Der Anteil an Lösemittel liegt bei ca. 50%. Ein textiler Flächenkörper wie ein Gewebe wird durch eine Beschichtungsanlage mit Rakel geführt. Das Gewebe wird in eine Lösung aus Beschichtungsmaterial und Lösemittel getaucht oder damit bestrichen.

Das Lösemittel muss nach der Beschichtung aufwändig und energieintensiv in einem Trockenkanal verdampft werden und das abgedampfte Lösemittel anschließend verbrannt bzw. entsorgt werden. Die typische Bahngeschwindigkeit in der Streichanlage beträgt ca. 3 m/min und wird durch den Lösungsmittelanteil begrenzt. Dies sorgt für hohe ökologische und ökonomische Belastungen. Hinzu kommen aufwändige, notwendige technische Maßnahmen wie Absaugungen (um die Mitarbeiter zu schützen) und explosionsgeschützte Produktionsbereiche (hoher administrativer Aufwand). Die Reaktion verläuft langsam und unkontrolliert nach Mischen der zwei Komponenten. Die getrocknete Schicht ist nach der Trocknungsphase im heißen Trocknungskanal zu etwa 50 % abreagiert - die vollständige Aushärtung geschieht später nach der Konfektion und Ausformung bei der Vulkanisation.

Ein solchen Beschichtungsverfahren ist somit mit einer Reihe von Problemen verbunden.

Zum einen erfordert der massive Einsatz von Lösemitteln, dass sie über einen Wärmekanal wieder aus dem Prozess entsorgt und danach verbrannt werden müssen, was zu einer hohen CO₂-Emission durch die Nachverbrennung des Lösungsmittelanteils führt. Dies ist unökonomisch und unökologisch. Außerdem werden Mitarbeiter durch die Lösemittel gefährdet, was aufwändige Absaugung nötig macht. Ferner verringert sich durch die mehrstufigen Prozessschritte die Kapazität der Produktionsanlage bei gleichzeitig höherem Energieeinsatz und geringerer Prozessgeschwindigkeit. Der Prozess erfordert Explosionsschutzmaßnahmen und es ergibt sich ein hoher behördlicher und dokumentarischer Aufwand.

Ein weiterer Nachteil besteht darin, dass die chemische Reaktion im Prozess zur Vernetzung durch die schwierige Ansteuerung der Heizzonen im langen Trockenkanal, die z.B. eine Länge von etwa 20 Metern aufweisen können, schwer kontrollierbar ist. Die Reaktion ist durch das 2K-System anfällig für Fehldosierungen. Poröse Oberflächen durch Lücken, die das abgedampfte Lösungsmittel hinterlässt, verringern die Verschleißfestigkeit der Riemen.

Ferner sind mögliche Nebenreaktionen ein Problem. Bei einem 2K Isocyanatsystem soll die Isocyanatkomponente mit der Diolkomponente reagieren, sie kann aber noch schneller mit Wasser reagieren, die z.B. im Gewebe enthalten sein kann. Dies führt zu CO₂-Bildung, was zu Unregelmäßigkeiten an der sich bildenden Oberfläche führen kann.

Der momentane Stand der Technik für die Beschichtung von Zugsträngen bei der Produktion von Antriebsriemen sieht eine Sprühlösung vor, die über Düsen auf die kalandrierte Platte und den Zugstrang gesprüht wird. Bei der Sprühlösung handelt es sich gewöhnlich um eine Gummimischung (z.B. EPDM), die in einem Lösungsmittel, z.B. Benzin, Xylol, aufgelöst wurde. Der Anteil an Lösemittel ist sehr hoch und liegt z.B. bei ca. 85%. Durch die Beschichtung wird die Grundhaftung zwischen Zugstrang und kalandrierter Platte sichergestellt.

Die Beschichtung der Zugstränge nach dem Stand der Technik ist insbesondere mit folgenden Problemen verbunden:
- Hoher Einsatz von Lösemitteln erfordert aufwändige Arbeitssicherheitsschutzmaßnahmen (Absaugung etc.).
- Die Lösemittel müssen vor der Vulkanisation wieder abdampfen, das kostet Zeit und ist unökonomisch und unökologisch.
- Das Aufsprühen muss bei einer relativ langsamen Geschwindigkeit geschehen, um einen gleichmäßigen Auftrag zu gewährleisten, was die Produktivität negativ beeinträchtigt
- Die Dosierung über den Sprühprozess ist unsicher und basiert auf Erfahrungswerten. Die tatsächliche Dosierung hängt unter anderem von den umgebenden klimatischen Bedingungen ab und muss entsprechend angepasst werden.
- Der Prozess ist unsicher in Bezug auf die Zugstrangbeschichtungsqualität, weil die entstehende funktionale Oberfläche relativ weich und damit beweglich ist. Der Zugstrang ist nicht 100%ig fixiert
- Die Düsen können verstopfen, besonders wenn das Verhältnis von Lösemittel zu Gummi nicht gut genug eingehalten worden ist, was massive Störungen der Anlage bedingt

Die Aufgabe der Erfindung bestand darin, die vorstehend beschriebenen Nachteile bei der Beschichtung von Festigkeitsträgern wie textilen Flächenkörpern und Zugsträngen bei der Herstellung von Elastomerartikeln zu überwinden, und damit in der Bereitstellung eines Verfahrens zur Herstellung von Elastomerartikeln, insbesondere Antriebsriemen, mit mindestens einem solchen Festigkeitsträger, welches nachhaltiger, umweltfreundlicher sowie energie- und prozesseffizienter ist und den Einsatz gesundheitlich bedenklicher Stoff wie Lösemittel vermeidet. Es sollte auch ein Beschichtungsverfahren bereitgestellt werden, welches eine bessere Kontrolle des Härtungsprozesses, einen einfacheren und schnelleren Prozessablauf sowie eine höhere Produktivität ermöglicht.

Die Erfinder haben festgestellt, dass die Aufgabe insbesondere durch den Einsatz eines strahlungshärtbaren, bevorzugt UV-härtbaren Lacks als Beschichtungszusammensetzung für die Beschichtung von textilen Flächenkörpern und/oder Zugsträngen bei der Herstellung von Elastomerartikeln wie Antriebsriemen und ein teilweises Vorhärten des Lacks mittels Bestrahlung, bevorzugt UV-Bestrahlung gelöst werden kann.

Die Erfindung betrifft somit ein Verfahren zur Herstellung eines Elastomerartikels, umfassend einen Körper aus vulkanisiertem Kautschuk und mindestens einen Festigkeitsträger ausgewählt aus einem textilen Flächenkörper und einem Zugstrang, wobei der Festigkeitsträger mit einem gehärteten Lack beschichtet ist, wobei das Verfahren folgende Schritte umfasst:
a) Aufbringen eines strahlungshärtbaren, bevorzugt UV-härtbaren Lacks, der mindestens ein Bindemittel und einen Photoinitiator enthält, auf den Festigkeitsträger,
b) teilweises Härten des aufgebrachten strahlungshärtbaren, bevorzugt UV-härtbaren Lacks durch Bestrahlung, insbesondere UV-Bestrahlung,
c) Bauen einer Anordnung, umfassend ein unvulkanisiertes Kautschukelement bevorzugt eine unvulkanisierte Kautschukplatte, und den Festigkeitsträger, der auf dem unvulkanisierten Kautschukelement angeordnet ist, wobei die Anordnung oder eine Teilanordnung, umfassend das unvulkanisierte Kautschukelement und den Festigkeitsträger, vor oder nach dem Aufbringen des strahlungshärtbaren, bevorzugt UV-härtbaren Lacks auf den Festigkeitsträger und dem teilweisen Härten gemäß der Schritte a) und b) gebaut wird,
d) Einbringen der Anordnung in eine Form, gegebenenfalls nach dem Zuschneiden der Anordnung auf eine passende Größe, wobei die Form bevorzugt eine profilierte Oberfläche aufweist,
e) Vulkanisieren der Anordnung in der Form durch Wärmebehandlung und gegebenenfalls unter Druck, wobei das Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

Durch das erfindungsgemäße Verfahren kann ein emissions- und schadstoffarmer Einbau von textilen Flächenkörpern und/oder Zugsträngen in Elastomerartikel, wie z.B. Antriebsriemen, erreicht werden.

Anstatt den textilen Flächenkörper, z.B. ein Gewebe oder ein Gestrick, mit einem Zwei-Komponenten-System zu beschichten, welches auf Lösemittel basiert, wird eine funktionelle Oberfläche durch die Verwendung eines Beschichtungsmaterials erzeugt, das eine Teilhärtung über einen Photoinitiator durch energiereiche Strahlung, wie z.B. UV-Strahlung oder IR-Strahlung, auslösen kann.

Dies geschieht über nachgeschaltete Strahlungsquellen, z.B. eine LED-UV-Lampe, die eine Strahlung mit passender Wellenlänge emittiert. Die Reaktionszeit und der Startpunkt sind so in Abhängigkeit der zugeführten Strahlung sehr präzise steuerbar. Der auf den textilen Flächenkörper aufgebrachte strahlungshärtbare, bevorzugt UV-härtbare Lack wird mittels Bestrahlung, z.B. UV-Strahlung teilweise gehärtet. Dies führt zu einer guten Handhabung bei der Konfektion durch verminderte Klebrigkeit der Oberfläche. Die Endaushärtung des strahlungshärtbaren Lacks, bevorzugt UV-Lacks, findet anschließend bei der Vulkanisation des Elastomerartikels thermisch statt.

Da der strahlungshärtbare Lack, bevorzugt UV-Lack, lösungsmittelfrei eingesetzt werden kann, muss der so mit einer funktionalen Oberfläche ausgestattete textile Flächenkörper, z.B. Gewebe oder Gestrick, nicht mehr über einen Trockenkanal geführt werden. Die Verschleißfestigkeit des Elastomerartikels wie eines Riemens wird erhöht, weil eine sehr glatte Oberfläche ohne poröse Stellen erzeugt wird.

Der Prozess ist durch den Wegfall beteiligter Lösemittel nachhaltiger, energieeffizienter und sicherer sowie besser steuerbar. Die Vorhärtung der Beschichtung kann über die Energiezufuhr exakt gesteuert werden. Es ist keine Explosionsschutzzone mehr notwendig, die aufwändige Zertifizierung hierfür entfällt. Absaugungen entfallen größtenteils, ebenso wie die Nachverbrennung bzw. Entsorgung von Lösemittel. Durch die Wahl verschiedener strahlungshärtbarer UV-Lacksysteme, bevorzugt UV-Lacksysteme, können neue funktionale Oberflächen realisiert werden. Die Mitarbeitersicherheit ist verbessert. Die Verweilzeit in der Beschichtungsanlage kann deutlich verkürzt werden, so dass der Durchsatz und die Produktivität erhöht werden kann. Es ist kein Dosierungssystem mehr notwendig, da der strahlungshärtbare Lack, bevorzugt UV-härtbare Lack, ein einkomponentiges System ist. Ferner treten keine Probleme mit Nebenreaktionen auf.

Diese Vorteile gelten in analoger Weise bei Einsatz des strahlungshärtbaren, bevorzugt UV-härtbaren Lacks für die Beschichtung bzw. Fixierung von Zugsträngen anstelle der üblichen Gummilösung nach dem Stand der Technik mit einem hohen Gehalt an organischem Lösemittel. Da der strahlungshärtbare Lack, bevorzugt UV-Lack, lösungsmittelfrei eingesetzt werden kann, entstehen auch hier deutlich weniger Lösemitteldämpfe, weil der aufgebrachte strahlungshärtbare, bevorzugt UV-härtbare Lack nahezu vollständig verbleibt. Lösungsmittelfreie strahlungshärtbare Lacke, bevorzugt UV-Lacke, werden in der Praxis auch als "100% Systeme" bezeichnet.

Da nach der Auftragung des strahlungshärtbaren, bevorzugt UV-härtbaren Lacks eine teilweise Härtung über energiereiche Strahlung wie z.B. UV-Licht erfolgt, sind die Reaktionszeit und der Startpunkt der teilweisen Härtung in Abhängigkeit der zugeführten Strahlung auch hier sehr präzise steuerbar. Ein Abdampfen von Lösemittel als Zwischenschritt ist nicht mehr notwendig. Der Zugstrang ist nach der teilweisen Härtung komplett fixiert und immobil. Es ist möglich die Reaktion so zu steuern, dass die Oberfläche trotzdem noch eine Grundklebrigkeit beibehält, was für den weiteren Produktionsprozess von Vorteil ist.

Insgesamt ist der Prozess durch den Wegfall beteiligter Lösemittel nachhaltiger, energieeffizienter und sicherer sowie besser steuerbar. Insbesondere ist auf folgende Vorteile hinzuweisen:
- Düsen für den Auftrag des strahlungshärtbaren, bevorzugt UV-härtbaren Lacks können nicht mehr verstopfen, weil der Lack keine festen Bestandteile mehr enthält und der Lack an der Düse nicht abdampft
- Arbeitssicherheitsschutzmaßnahmen können in vielen Fällen entfallen, woraus sich Geld- und Energieeinsparungen ergeben
- Der Produktionsprozess wird beschleunigt, weil das Abdampfen des Lösemittels entfällt
- Die Vorhärtung der Beschichtung kann über den Energieeintrag der Strahlung äußerst definiert gesteuert werden
- Der Zugstrang ist sehr gut fixiert und nicht mehr beweglich, was sich positiv auf die Zugstranglage im Endprodukt auswirkt

Im Folgenden wird das erfindungsgemäße Verfahren ausführlich beschrieben. Die folgenden Angaben gelten sowohl für textile Flächenkörper als auch Zugstränge als Festigkeitsträger, soweit nicht anders angegeben. Sofern Unterschiede vorliegen, wird speziell darauf hingewiesen.

Das erfindungsgemäße Verfahren betrifft die Herstellung eines Elastomerartikels, umfassend einen Körper aus vulkanisiertem Kautschuk und mindestens einen Festigkeitsträger ausgewählt aus einem textilen Flächenkörper und einem Zugstrang, wobei der Festigkeitsträger mit einem gehärteten Lack beschichtet ist.

Der herzustellende Elastomerartikel oder elastomere Artikel umfasst einen Körper aus vulkanisiertem Kautschuk bzw. Gummi. Der Körper wird wie üblich durch Vulkanisation und gewöhnlich einer Formung mindestens eines unvulkanisierten Kautschukelements, insbesondere einer unvulkanisierte Kautschukplatte, gebildet.

Das unvulkanisierte Kautschukelement, insbesondere die unvulkanisierte Kautschukplatte, kann z.B. eine Dicke von 0,5 bis 5 mm, bevorzugt 1 bis 2 mm, aufweisen.

Das unvulkanisierte Kautschukelement, insbesondere die unvulkanisierte Kautschukplatte, und damit der Körper aus vulkanisiertem Kautschuk, kann aus den üblichen Kautschukmischungen bzw. Kautschuk-Compounds auf Basis üblicher Kautschuke gebildet sein.

Spezielle Beispiele für den Kautschuk sind Ethylen-Propylen-Kautschuk (EPM), Ethylen-Propylen-Dien-Kautschuk (EPDM), Fluor-Kautschuk (FKM), Naturkautschuk (NR), Polychloropren-Kautschuk (CR), Styrol-Butadien-Kautschuk (SBR), Butadien-Kautschuk (BR), Ethylen-Vinyl-Acetat-Copolymer (EVA) oder Polyurethan (PU) oder Mischungen davon, beispielsweise in Form eines EPM/EPDM- oder SBR/BR-Verschnittes. Bevorzugte Kautschuke sind Ethylen-Propylen-Kautschuk (EPM), Ethylen-Propylen-Dien-Kautschuk (EPDM), teilhydrierter oder hydrierter Nitrilkautschuk (HNBR), Polychloropren-Kautschuk (CR) oder Mischungen davon, wobei EPDM und/oder CR besonders bevorzugt sind.

Die Kautschukmischung für den Körper aus vulkanisiertem Kautschuk enthält neben dem Kautschuk oder der Kautschukmischung gewöhnlich ein oder mehrere Additive. Die Kautschukmischung umfasst in der Regel mindesten einen Vernetzer oder ein Vernetzersystem aus Vernetzungsmittel und Beschleuniger, die auch als thermischer Initiator bezeichnet werden. Der Vernetzer bzw. das Vernetzersystem können z.B. und bevorzugt mindestens ein Peroxid und/oder mindestens ein Metalloxid beinhalten. Weitere Beispiele für Additive sind Füllstoffe, Verarbeitungshilfsmittel, Weichmacher, Alterungsschutzmittel und Kombinationen davon. Weitere nach Bedarf einsetzbare Additive sind z.B. Farbpigmente oder Harze. Es wird auf den allgemeinen Stand der Kautschukmischungstechnologie verwiesen.

Die Kautschukmischung des unvulkanisierten Kautschukelements wird wie später beschrieben im Verbund mit einer Anordnung vulkanisiert, um den Elastomerartikel zu bilden. Bei der Vulkanisation handelt es bevorzugt um eine radikalische Vernetzung und besonders bevorzugt um eine peroxidische Vernetzung. Die Kautschukmischung enthält bevorzugt ein Peroxid als thermischen Initiator. Die Vulkanisation erfolgt durch Wärmebehandlung der Anordnung.

Der in dem Elastomerartikel enthaltene mindestens eine Festigkeitsträger ist ausgewählt aus einem textilen Flächenkörper und einem Zugstrang. Der Elastomerartikel kann ein oder mehrere textile Flächenkörper, ein oder mehrere Zugstränge oder eine Kombination von einem oder mehreren textilen Flächenkörpern und einem oder mehreren Zugsträngen umfassen. Gemäß der vorliegenden Erfindung ist mindestens ein Festigkeitsträger, nämlich ein textiler Flächenkörper oder ein Zugstrang, mit dem gehärteten Lack auf Basis des strahlungshärtbaren, bevorzugt UV-härtbaren Lacks beschichtet. Weitere im Elastomerartikel vorhandene Festigkeitsträger sind nicht notwendigerweise mit dem gehärteten Lack auf Basis des strahlungshärtbaren, bevorzugt UV-härtbaren Lacks beschichtet. Es ist aber natürlich auch möglich, dass zwei oder mehr in dem Elastomerkörper vorhandene Festigkeitsträger mit dem strahlungshärtbaren, bevorzugt UV-härtbaren Lack beschichtet sind, z.B. ein textiler Flächenkörper und mindestens ein Zugstrang.

Bei dem textilen Flächenkörper ist gewöhnlich eine Seite mit der Beschichtung auf Basis des strahlungshärtbaren, bevorzugt UV-härtbaren Lacks versehen. Die Seite ist die Seite im Elastomerartikel, die nach außen zeigt. Bei dem oder den Zugsträngen ist gewöhnlich mindestens ein Teil der Oberfläche des Zugstrangs beschichtet. Da der Auftrag des strahlungshärtbaren, bevorzugt UV-härtbaren Lacks gewöhnlich erfolgt, wenn der Zugstrang auf einem unvulkanisierten Kautschukelement angeordnet ist, ist es möglich, dass die Beschichtung nur auf einem Teil der Oberfläche des Zugstrangs vorhanden ist.

Der textile Flächenkörper ist an einer Seite des Körpers aus vulkanisiertem Kautschuk angebunden, z.B. über eine Haftschicht. Der textile Flächenkörper kann z.B. ein Gewebe, ein Gewirke oder ein Gestrick sein, wobei ein Gewebe oder ein Gestrick bevorzugt ist.

Der textile Flächenkörper, insbesondere das Gewebe oder Gestrick, bzw. die Garne oder Fasern, aus denen der textile Flächenkörper gebildet wird, können z.B. aus Polyamid (PA), wie z.B. Nylon, Polyester (PES), Baumwolle, Aramid, Elastofasern, wie z.B. Elastan, Rayon, Tencel, Polyetheretherketon (PEEK), Polyimid (PI) oder einer Kombination davon gebildet sein. Geeignete Kombinationen sind z.B. Mischungen von Polyamid, wie Nylon, und Aramid, Mischungen von Polyamid, wie Nylon, Aramid und Elastan oder Mischungen von Baumwolle mit Elastan.

Elastofasern sind Fasern, die extrem dehnbar sind und nach Aufhebung der Zugkraft weitgehend in den ursprünglichen Zustand zurückkehren. Bei Elastan handelt es sich um ein Copolymer, dass in der Regel zu mindestens 85 Gew.-% Polyurethan-Segmente enthält.

In einer bevorzugten Ausführungsform ist der textile Flächenkörper elastisch, z.B. mit einer Dehnfähigkeit von mindestens 50%, bevorzugt mindestens 80%, bevorzugter mindestens 100%, bezogen auf die Ausgangslänge des textilen Flächenkörpers in Dehnrichtung. Solche elastischen textilen Flächenkörper sind dem Fachmann bekannt und Stand der Technik.

In einer bevorzugten Ausführungsform kann der textile Flächenkörper, insbesondere das Gewebe oder Gestrick, auf einer Seite mit einer Gummierung versehen sein. Die Gummierung kann auf einem unvulkanisierten Kautschuk bzw. Kautschukmischung basieren. Diese Gummierung befindet sich auf der Seite des textilen Flächenkörpers, die in der Anordnung dem unvulkanisierten Kautschukelement bzw. im Elastomerkörper dem Körper aus vulkanisiertem Kautschuk zugewandt ist. Sofern der textile Flächenkörper eine solche Gummierung auf einer Seite aufweist, wird der strahlungshärtbaren, bevorzugt UV-härtbare Lack auf der anderen Seite des textilen Flächenkörpers aufgebracht.

Die Gummierung kann z.B. mittels einer Gewebestreichanlage als Lösung oder Dispersion oder als kalandrierte Platte auf den textilen Flächenkörper aufgebracht werden.

Die Gummierung, die zwischen dem Körper aus vulkanisiertem Kautschuk und dem textilen Flächenkörper angeordnet ist, kann als Haftschicht zur verbesserten Anbindung des textilen Flächenkörpers an dem Körper dienen. Ein besonderer Vorteil einer solchen Gummierung besteht darin, dass die Beschichtung (der anderen Seite) des textilen Flächenkörpers mit dem strahlungshärtbaren, bevorzugt UV-härtbaren Lack vereinfacht wird, da ein Hindurchlaufen des strahlungshärtbaren, bevorzugt UV-härtbaren Lacks durch den textilen Flächenkörper vermieden wird. Die Gummierung dient insofern als Sperrschicht.

Als Zugstrang können alle dem Fachmann bekannten Zugstränge eingesetzt werden. Gewöhnlich werden Zugstränge aus Filamenten gebildet, die zu Litzen verzwirnt werden, von denen mehrere den fertigen Zugstrang bilden. Als Zugstrang können die auf dem Gebiet üblichen Cords verwendet werden. Der Zugstrang kann z.B. ein Stahlcord, Polyestercord, Polyamidcord, Aramidcord, Glascord, Carboncord, Polyetheretherketon-Cord, Polyethylen-2,6-naphthalat-Cord, Baumwollcord, Rayon-Cord, Tencel-Cord oder eine Kombination davon, z.B. ein Glas/Carbon-Hybridcord, sein.

In Schritt a) des erfindungsgemäßen Verfahrens wird ein strahlungshärtbarer, bevorzugt UV-härtbarer Lack, der mindestens ein Bindemittel und einen Photoinitiator enthält, auf den Festigkeitsträger aufgebracht.

Der strahlungshärtbare Lack ist ein Lack, der durch Bestrahlung mit energiereicher Strahlung gehärtet werden kann, z.B. durch UV-Bestrahlung oder IR-Bestrahlung. Der strahlungshärtbare Lack ist bevorzugt ein UV-härtbarer Lack bzw. UV-Lack, d.h. ein Lack der mittels UV-Bestrahlung gehärtet werden kann. UV ist die gebräuchliche Abkürzung für Ultraviolett. IR ist die gebräuchliche Abkürzung für Infrarot.

Der strahlungshärtbare, bevorzugt UV-härtbare Lack enthält mindestens ein Bindemittel und einen Photoinitiator. Solche strahlungshärtbaren, bevorzugt UV-härtbaren Lacke sind dem Fachmann bekannt und Stand der Technik. Strahlungshärtbare Lacke können durch Strahlung, wie z.B. UV-Strahlung oder IR-Strahlung, gehärtet werden. Bevorzugt sind UV-härtbare Lacke, die durch UV-Strahlung gehärtet werden können (UV-Härtung). Es ist aber auch möglich, strahlungshärtbare, bevorzugt UV-härtbare Lacke thermisch zu härten. Demgemäß ist es auch möglich strahlungshärtbare, bevorzugt UV-härtbare Lacke teilweise durch Strahlung, bevorzugt UV-Strahlung und teilweise thermisch zu härten, wovon in der vorliegenden Erfindung Gebrauch gemacht wird. Der strahlungshärtbare Lack kann auch als strahlungshärtbare Kleber oder Beschichtungszusammensetzung bezeichnet werden. Entsprechend kann ein UV-härtbare Lack auch als UV-härtbarer Kleber oder UV-härtbare Beschichtungszusammensetzung bezeichnet werden.

Das Bindemittel des strahlungshärtbaren, bevorzugt UV-härtbaren Lacks kann wie üblich aus Acrylaten, Methacrylaten, Epoxiden, ungesättigten Polesterharzen oder einer Kombination davon ausgewählt sein, wobei Methacrylate und insbesondere Acrylate (oligomere Acrylate bzw. Acrylat-Prepolymere) besonders bevorzugt sind. Das Bindemittel kann ein monomeres oder oligomeres Bindemittel bzw. Prepolymer sein. Das Bindemittel kann pro Molekül ein, zwei oder mehr funktionelle Gruppen, wie z.B. Acryl-, Methacryl, Doppelbindungen und/oder Epoxidgruppen, für die Polymerisation oder Vernetzung aufweisen. Bei dem Bindemittel kann es sich um ein Harz handeln.

Beispiele für geeignete Bindemittel sind Monomere oder Oligomere mit Epoxid-, Acryl- und/oder Methacrylgruppen, Epoxidharze, Polyetheracrylate, Urethanacrylate, Polyesteracrylate, Epoxyacrylate, Melaminacrylate, Urethanmethacrylate, Polyestermethacrylate, Polyethermethacrylate, Melaminmethacrylate und Epoxymethacrylate, jeweils mit ein, zwei, drei oder mehr Acrylatgruppen. Monacrylate ergeben z.B. eine sehr gute Flexibilität und reduzieren die Viskosität.

Acrylat-Prepolymere mit definierter Molekülgröße können z.B. durch Umsetzung von Epoxiden oder Epoxidharzen (Epoxidacrylate), Diisocyanaten (Urethanacrylate) oder Polyestern (Polyesteracrylate) mit Acryl- oder Methacrylsäure hergestellt werden. Epoxidacrylate können z.B. das Reaktionsprodukt aus Bisphenol A und Acrylsäure sein. Urethanacrylate werden z.B. durch Umsetzung von Hydroxyacrylaten mit Diisocyanaten erhalten. Polyesteracrylate sind z.B. Umsetzungsprodukte aus gesättigten Polyestern und Hydroxyacrylaten.

Der strahlungshärtbare, bevorzugt UV-härtbare Lack kann neben dem Bindemittel auch monomere Reaktionspartner, z.B. als Vernetzungskomponente, und/oder monomere Reaktivverdünner zur Viskositätseinstellung enthalten. Die monomeren Reaktionspartner können auch selbst als Bindemittel fungieren. Diesen monomeren Reaktionspartner bzw. Reaktivverdünnern ist gemeinsam, dass sie mindestens eine, typischerweise mindestens zwei funktionelle Gruppe, z.B. 1, 2, 3, 4 oder 5 funktionelle Gruppen, enthalten, die mit dem Bindemittel reagieren können. Die funktionellen Gruppen sind häufig die gleichen wie im Bindemittel, z.B. Epoxid-, Acrylat- oder Methacrylatgruppen. Die reaktiven monomeren Reaktionspartner oder Verdünnungsmittel sind somit keine Lösungsmittel.

Die monomeren Reaktionspartner oder Reaktivverdünner können z.B. monomere Acrylate, z.B. Mono-, Di- oder Triacrylate, monomere Methacrylate, z.B. Mono-, Di- oder Trimethacrylate, oder monomere Epoxide, z.B. Mono-, Di- oder Triepoxide sein.

Konkrete Beispiele für monomere Reaktionspartner oder monomere Reaktivverdünner, die gegebenenfalls auch als Bindemittel geeignet sind, sind allgemein Mono-, Di- oder Triacrylate, wie z.B. 1,6-Hexandiolacrylat (HDDA), propoxyliertes Glycerintriacrylat (GPTA), Trimethylolpropantriacrylat (TMPTA), Dipropylenglycoldiacrylat (DPGDA) und Bisphenol A-ethoxylatdiacrylat.

Der strahlungshärtbare, bevorzugt UV-härtbare Lack enthält ferner einen Photoinitiator. Die Polymerisation UV-härtender Lacke kann nach einem radikalischen oder kationischen Mechanismus verlaufen, der durch den Photoinitiator ausgelöst wird. Dafür nimmt der Photoinitiator die Strahlungsenergie, bevorzugt UV-Strahlungsenergie, auf und bildet eine reaktive Spezies, gewöhnlich ein Radikal, die die Polymerisation in Gang setzt. Der Photoinitiator ist naturgemäß ein Photoinitiator für die Strahlungshärtung, bevorzugt UV-Härtung, d.h. er kann Strahlung im Wellenlängenbereich der Strahlung, bevorzugt im UV-Bereich, absorbieren und die reaktiven Spezies bilden. Solche Photoinitiatoren sind dem Fachmann bekannt und im Handel erhältlich.

Photoinitiatoren, die durch UV-Licht aktiviert werden, werden auch UV-Initiatoren genannt. Die Photoinitiatoren sind bevorzugt Photoinitiatoren, die bei UV-Bestrahlung in einem Wellenlängenbereich von 270 bis 415 nm aktiviert werden.

Der Photoinitiator kann z.B. ausgewählt sein aus Benzoinethern, Benzil-monoketalen, α-substituierten Acetophenon-Derivaten, Phenylglyoxylsäureestern, α-Acyloximestern, Acylphosphinoxiden, Benzophenonen, Thioxanthonen oder einer Kombination davon, wobei α-substituierte Acetophenon-Derivate, Acylphosphinoxide und Thioxanthone bevorzugt sind. Die α-substituierten Acetophenon-Derivate können α-Hydroxyketone oder α-Aminoketone sein. Acylphosphinoxide können Monoacylphosphinoxide oder Bisacylphosphinoxide sein.

Es lassen sich Photoinitiatoren vom Typ I und vom Typ II unterscheiden. Während Photoinitiatoren vom Typ I eigenständig funktionsfähig sind, benötigen Photoinitiatoren vom Typ II zusätzlich einen Coinitiator, gewöhnlich ein tertiäres Amin, mit denen die reaktive Spezies in einer bimolekularen Reaktion gebildet wird. Zu den Photoinitiatoren vom Typ II gehören z.B. aromatische Ketone wie Benzophenon- oder Thioxanthon-Derivate, die auch als Keton/Amin-Systeme bezeichnet werden.

Die UV-Bestrahlung erfolgt bevorzugt mittels UV-emittierender UV-Lampen, die bevorzugt UV-Strahlung in einem Wellenlängenbereich von 270 bis 415 nm liefern. Beispiele für UV-Lampen sind Quecksilberdampflampen, Quarzlampen oder UV-LED-Lampen, die im Folgenden auch einfach als LED-Lampen bezeichnet werden. Herkömmliche Quecksilberdampflampen emittieren in einem breiteren Wellenlängenbereich von z.B. 200 bis 500 nm. Die UV-Lampen sind bevorzugt LED-Lampen. Diese liefern in der Regel monochromatisches Licht und brauchen relativ wenig Energie. Der Photoinitiator und die UV-Wellenlänge des UV-Bestrahlungseinrichtung, insbesondere LED-Lampen, werden aufeinander abgestimmt. Geeignet sind z.B. Photoinitiatoren für die typischen Wellenlängen 365, 385, 395 oder 405 nm, wie sie mit LED-Lampen erzeugt werden können.

Konkrete Beispiele für geeignete Photoinitiatoren sind Diphenyl-(2,4,6-trimethylbenzoyl)-phosphinoxid (TPO), Ethyl-(2,4,6-trimethylbenzoyl)-phenylphosphinat (TPO-L), Phenyl-bis(2,4,6-trimethylbenzoyl)-phosphinoxid (BAPO) und Isopropylthioxanthon (IPX). Bei IPX wird gewöhnlich ein Coinitiator wie ein tertiäres Amin (Aminbooster) mit eingesetzt. Weitere Beispiele sind 2-Hydroxy-2-methyl-1-phenylpropan-1-on und 2-Hydroxy-1-[4-(hydroxyethoxy)phenyl]-2-methylpropan-1-on.

Photoinitiatoren, die durch IR-Strahlung aktiviert werden, werden auch IR-Initiatoren genannt. Solche Photoinitiatoren sind im Stand der Technik bekannt. Die IR-Bestrahlung kann mithilfe üblicher IR-Strahler erfolgen.

In einer Ausführungsform kann der strahlungshärtbare, bevorzugt UV-härtbare Lack ferner einen thermischen Initiator, wie Isocyanat- oder Peroxidverbindungen, umfassen. Der thermische Initiator ist bevorzugt eine Peroxidverbindung. Beispiele für typische Peroxidverbindungen sind 2,5-Dimethylhexan-2,5-di-tert.-butylperoxid (Trigonox 101^{®} und 1,4-Bis(tert.-butylperoxy-isopropyl)benzol (Perkadox^{®} 14). Durch den zusätzlichen Einsatz eines thermischen Initiators werden sogenannten Dualcure-Systeme erhalten, die sowohl durch Bestrahlung, bevorzugt UV-Bestrahlung als auch thermisch gehärtet werden können. Wie gesagt, sind die strahlungshärtbaren, bevorzugt UV-härtbaren Lacke in der Regel aber auch ohne thermischen Initiator in der Wärme härtbar. Der thermische Initiator kann z.B. dazu dienen die thermische Härtung zu beschleunigen oder die notwendige Temperatur zur Härtung zu verringern. Ohne sich an eine Theorie binden zu wollen, ist es möglich, dass die thermische Härtung der strahlungshärtbaren, bevorzugt UV-härtbaren Lacks auch durch die im unvulkanisierten Kautschukelement enthaltenen Vernetzer wie Peroxidverbindungen unterstützt werden kann, z.B. mittels Migration.

Der strahlungshärtbare, bevorzugt UV-härtbare Lack kann ferner einen oder mehrere Zusatzstoffe enthalten, die auf dem Gebiet üblich sind. Beispiele für solche Zusatzstoffe sind Entschäumer, Entlüfter, feste und dispergierte Wachse, Tenside, Gleitmittel, Silicone, Pigmente oder Füllstoffe.

Der strahlungshärtbare, bevorzugt UV-härtbare Lack kann ein organisches Lösungsmittel oder Wasser als Lösungsmittel enthalten, z.B. ein wässriger strahlungshärtbarer, bevorzugt UV-härtbarer Lack. Der Feststoffgehalt von strahlungshärtbaren, bevorzugt UV-härtbaren Lacken auf Wasserbasis oder auf Basis organischer Lösungsmittel kann z.B. im Bereich von 30-60 Gew.-% liegen.

In der Regel ist es aber besonders bevorzugt, dass der strahlungshärtbare, bevorzugt UV-härtbare Lack im Wesentlichen frei oder frei von Lösungsmitteln ist. Im Wesentlichen frei von Lösungsmitteln bedeutet hier weniger als 5 Gew.-% Lösungsmittel, bevorzugt weniger als 1 Gew.-% Lösungsmittel, bezogen auf das Gesamtgewicht des strahlungshärtbaren, bevorzugt UV-härtbaren Lacks. Es ist besonders bevorzugt, dass der strahlungshärtbare, bevorzugt UV-härtbare Lack frei von Lösungsmittel ist.

Das Fehlen von Lösungsmittel ist vorteilhaft, da auf diese Weise wenig oder gar keine Energie für die Abdampfung erforderlich ist und eine Emission von organischen Verbindungen weitgehend oder vollständig verhindert werden kann. Maßnahme zur Sicherheit, wie Explosionsschutz und zum Schutz des Personals vor gesundheitlichen Schäden, können aufgrund fehlender organischer Lösungsmittel deutlich verringert werden oder ganz entfallen.

Der strahlungshärtbare, bevorzugt UV-härtbare Lack ist flüssig oder fließfähig. Auch ohne Lösungsmittel kann der strahlungshärtbare, bevorzugt UV-härtbare Lack relativ dünnflüssig eingestellt sein, z.B. mithilfe eines monomeren Reaktivverdünners. Der strahlungshärtbare, bevorzugt UV-härtbare Lack ist bevorzugt relativ dünnflüssig und in der Regel etwas viskoser als Wasser. Der strahlungshärtbare, bevorzugt UV-härtbare Lack kann z.B. eine Viskosität von 5 bis 5000 centipoise aufweisen, wobei als vergleich Wasser herangezogen wird, das eine Viskosität von etwa 1 centipoise aufweist.

Für den Auftrag des strahlungshärtbaren, bevorzugt UV-härtbaren Lacks auf den Festigkeitsträger im erfindungsgemäßen Verfahren können die hierfür üblichen Auftragverfahren bzw. Beschichtungsverfahren eingesetzt werden. Der strahlungshärtbare, bevorzugt UV-härtbare Lack kann z.B. durch Walzenauftrag, Sprühen, Tauchen, Gießen oder Streichen, z.B. mit einer Rakel, aufgebracht werden.

Für den Fall eines textilen Flächenkörpers, wie eines Gewebes oder eines Gestricks, als Festigkeitsträger erfolgt der Auftrag des bzw. die Beschichtung mit dem strahlungshärtbaren, bevorzugt UV-härtbaren Lack bevorzugt durch Tauchen des textilen Flächenkörpers in den strahlungshärtbaren, bevorzugt UV-härtbaren Lack oder durch Streichen des strahlungshärtbaren, bevorzugt UV-härtbaren Lacks auf den textilen Flächenkörper, z.B. mit einer Rakel. Sofern der textilen Flächenkörper auf einer Seite eine Gummierung aufweist, erfolgt der Auftrag des strahlungshärtbaren, bevorzugt UV-härtbaren Lacks wie gesagt auf der gegenüberliegenden Seite.

Für den Fall eines Zugstrangs als Festigkeitsträger erfolgt der Auftrag des bzw. die Beschichtung mit dem UV-härtbaren Lack bevorzugt durch Sprühen oder Tauchen. Zum Sprühen können ein oder mehrere Sprühdüsen eingesetzt werden.

Die Schichtdicke der aufgebrachten Lacks im gehärteten Zustand kann z.B. im Bereich von etwa 3 µm bis 1 mm, bevorzugt 5 µm bis 500 µm, besonders bevorzugt 50 µm bis 250 µm, liegen. Bei den üblicherweise eingesetzten strahlungshärtbaren, bevorzugt UV-härtbaren Lacken, die frei oder im Wesentlichen frei von Lösungsmitteln sind, besteht zwischen der Nassschichtdicke und der Dicke im gehärteten Zustand kein wesentlicher Unterschied.

Der Auftrag des strahlungshärtbaren, bevorzugt UV-härtbaren Lacks im erfindungsgemäßen Verfahren gemäß Schritt a) auf den Festigkeitsträger kann stattfinden bevor der Festigkeitsträger mit anderen Elementen des Elastomerartikels zu einer Anordnung oder einer Teilanordnung zusammengestellt wurde oder danach. Sofern der Festigkeitsträger ein textiler Flächenkörper ist, wird der strahlungshärtbare, bevorzugt UV-härtbare Lack bevorzugt vor der Bildung einer Anordnung oder Teilanordnung aufgebracht. Sofern der Festigkeitsträger ein Zugstrang ist, wird der strahlungshärtbare, bevorzugt UV-härtbare Lack bevorzugt nach der Bildung einer Teilanordnung aufgebracht.

Wenn der strahlungshärtbare, bevorzugt UV-härtbare Lack auf den Festigkeitsträger, bevorzugt den textilen Flächenkörper, aufgebracht wird, bevor er in eine Anordnung oder Teilanordnung eingebaut wird, kann der Lack auf einen vereinzelten Festigkeitsträger, insbesondere textilen Flächenkörper, aufgebracht werden oder auf eine Bahn des textilen Flächenträgers aufgebracht werden, die dann nach der teilweisen Härtung des Lacks gemäß Schritt b) in geeignete Größen geschnitten werden kann.

Nachdem der strahlungshärtbare, bevorzugt UV-härtbare Lack gemäß Schritt a) aufgebracht wurde, wird der aufgebrachte strahlungshärtbare, bevorzugt UV-härtbare Lack gemäß Schritt b) durch Bestrahlung mit energiereicher Strahlung, wie IR-Strahlung oder UV-Strahlung, bevorzugt UV-Bestrahlung, teilweise gehärtet.

Für die UV-Bestrahlung können alle üblichen Lampen zur UV-Bestrahlung eingesetzt werden. Es ist aber besonders bevorzugt, zur UV-Bestrahlung eine oder mehrere UV-Licht emittierende LED-Lampen zu verwenden. LED ist die gebräuchliche Abkürzung für Leuchtdioden. UV-LEDs sind vorteilhaft, da sie weitgehend monochromatisches Licht erzeugen, wodurch ein geringerer Energieaufwand benötigt wird und die Wellenlänge zielgenau mit dem in dem UV-Lack eingesetzten Photoinitiator abgestimmt werden kann. Ein weiterer Vorteil von LED UV-Lampen ist, dass sie unmittelbar ein- und ausgeschaltet werden können und auch dimmbar sind. Bei anderen Lampenarten, wie z.B. Quecksilberlampen, ist das nicht möglich, da sie dadurch kaputtgehen. LED-Lampen weisen auch eine deutlich längere Lebensdauer auf.

Für die IR-Bestrahlung können alle üblichen Lampen zur IR-Bestrahlung eingesetzt werden, wie z.B. IR-Strahler. Zur IR-Bestrahlung werden ebenfalls bevorzugt eine oder mehrere IR-Strahlung emittierende LED-Lampen verwendet.

Die einen oder mehrere Lampen zur Bestrahlung, bevorzugt UV-Bestrahlung, insbesondere UV-LED-Lampen, werden zweckmäßigerweise so angeordnet, dass die Bestrahlung, bevorzugt UV-Bestrahlung direkt nach dem Auftrag des strahlungshärtbaren, bevorzugt UV-härtbaren Lacks die teilweise Härtung bewirken können. Die Reaktionszeit, der Startpunkt und die partielle Aushärtung des Lacks sind sehr genau steuerbar, abhängig von der Menge der eingesetzten Strahlung, insbesondere UV-Strahlung, die auch über die Anzahl der installierten Lampen, insbesondere UV-LED-Lampen, gesteuert werden kann.

Die UV-Bestrahlung, insbesondere mit LED, erfolgt bevorzugt in einem Wellenlängenbereich von 270 bis 415 nm. Typische und im Handel erhältliche UV-LED-Lampen emittieren z.B. im Wesentlichen monochromatisches UV-Licht mit Wellenlängen von 365, 385, 395 oder 405 nm.

Die Härtung bzw. Vorhärtung des aufgebrachten strahlungshärtbaren, bevorzugt UV-härtbaren Lack mittels energiereicher Strahlung, insbesondere UV-Strahlung, wird so durchgeführt, dass der Lack nur teilweise gehärtet wird. Die Reaktionszeit, der Startpunkt und der Härtegrad der teilweisen Härtung sind in Abhängigkeit der zugeführten Strahlung sehr präzise steuerbar.

Durch die teilweise Härtung wird der ursprünglich relative dünnflüssige strahlungshärtbaren Lack, bevorzugt UV-Lack, im Allgemeinen fest. Anderseits ist der nur teilweise gehärtete Lack weiterhin flexibel, so dass er für die folgenden Arbeitsschritte, insbesondere eine Formung, verformbar bleibt. Bei der teilweisen Härtung wird insbesondere ein nicht fließfähiger, aber verformbarer Lack erhalten. Durch die teilweise Härtung wird insbesondere ein staubtrockener bzw. griff trockener (touch-dry) Lack erhalten.

Bei der teilweisen Härtung des strahlungshärtbaren Lacks, bevorzugt UV-Lacks, auf dem textilen Flächenkörper kann eine verminderte Klebrigkeit der Oberfläche erreicht werden, was zu einer guten Handhabung bei der Konfektion führt. Bei der teilweisen Härtung des strahlungshärtbaren Lacks, bevorzugt UV-Lacks, auf dem auf einem unvulkanisierten Kautschukelement angeordneten Zugstrang, kann der Zugstrang durch die teilweise Härtung auf dem Kautschukelement komplett fixiert und immobilisiert werden. Es ist möglich, die Reaktion so zu steuern, dass die Oberfläche trotzdem noch eine Grundklebrigkeit beibehält, was für den weiteren Produktionsprozess von Vorteil ist.

Gemäß Schritt c) des erfindungsgemäßen Verfahrens wird eine Anordnung gebaut bzw. zusammengestellt, die ein unvulkanisiertes Kautschukelement, bevorzugt eine unvulkanisierte Kautschukplatte, und den Festigkeitsträger, der auf dem unvulkanisierten Kautschukelement angeordnet ist, umfasst. Die Anordnung oder eine Teilanordnung, umfassend das unvulkanisierte Kautschukelement und den Festigkeitsträger, werden vor oder nach dem Aufbringen des strahlungshärtbaren, bevorzugt UV-härtbaren Lacks auf den Festigkeitsträger und dem teilweisen Härten gemäß der Schritte a) und b) gebaut.

Das unvulkanisierte Kautschukelement bzw. Kautschukplatte, auf dem der Festigkeitsträger angeordnet ist, wurde bereits vorstehend diskutiert, worauf verwiesen wird.

Weitere Komponenten, die in der Anordnung enthalten sein können, sind z.B. mindestens ein zusätzliches zweites unvulkanisiertes Kautschukelement, insbesondere mindestens eine zusätzliche zweite unvulkanisierte Kautschukplatte, und/oder zusätzliche Festigkeitsträger sein. Das zweite unvulkanisierte Kautschukelement bzw. die zweite unvulkanisierte Kautschukplatte kann aus den gleichen Kautschukmischungen gebildet sein, die vorstehend für das unvulkanisierte Kautschukelement bzw. die unvulkanisierte Kautschukplatte beschrieben wurden. Das zweite unvulkanisierte Kautschukelement und das unvulkanisierte Kautschukelement, auf dem der Festigkeitsträger angeordnet ist, können aus der gleichen Kautschukmischung oder einer verschiedenen Kautschukmischung sein. Die beiden unvulkanisierten Kautschukelemente oder Kautschukplatten können eine gleiche Dicke oder eine unterschiedliche Dicke aufweisen.

Bei einem bevorzugten Elastomerartikel in Form eines Zahnriemens umfasst die Anordnung z.B. bevorzugt in dieser Reihenfolge den textilen Flächenkörper, der auf der nach außen weisenden Seite mit dem teilweise gehärteten Lack, insbesondere UV-Lack, beschichtet ist, das unvulkanisierte Kautschukelement, insbesondere die unvulkanisierte Kautschukplatte und ein zweites unvulkanisiertes Kautschukelement, insbesondere eine zweite unvulkanisierte Kautschukplatte, wobei mindestens ein Zugstrang zwischen den beiden Kautschukelementen bzw. Kautschukplatten angeordnet ist.

Bei einem bevorzugten Elastomerartikel in Form eines Keilrippenriemens umfasst die Anordnung z.B. bevorzugt das unvulkanisierte Kautschukelement, insbesondere die unvulkanisierte Kautschukplatte, mindestens einen Zugstrang, der auf einer Oberfläche des unvulkanisierten Elements mittels der Beschichtung mit dem teilweise gehärteten Lack, insbesondere UV-Lack, fixiert ist, und ein zweites unvulkanisiertes Kautschukelement, insbesondere eine zweite unvulkanisierte Kautschukplatte, wobei der mindestens eine fixierte Zugstrang zwischen den beiden Kautschukelementen bzw. Kautschukplatten angeordnet ist.

Die Anordnung kann auf einer ebenen Unterlage aufgebaut werden. Es ist aber bevorzugt, die Anordnung auf einer Trommel, insbesondere einer drehbaren Trommel, als Unterlage aufzubauen. In diesem Fall können die Enden der Kautschukelemente bzw. -platten gegebenenfalls jeweils miteinander verbunden werden, so dass als Rohling ein Wickel erhalten wird.

Wie vorstehend ausgeführt kann die Anordnung oder bevorzugt eine Teilanordnung, umfassend das unvulkanisierte Kautschukelement und den Festigkeitsträger, vor oder nach dem Aufbringen des strahlenhärtbaren, bevorzugt UV-härtbaren Lacks auf den Festigkeitsträger und dem teilweisen Härten gemäß der Schritte a) und b) gebaut werden.

Im Ergebnis wird bei dem erfindungsgemäßen Verfahren bei der Verwendung eines textilen Flächenkörpers, der mit dem teilweise gehärteten Lack beschichtet ist, eine Anordnung erhalten, bei dem sich der textile Flächenkörper auf einer Seite der Anordnung befindet und die darauf befindliche Beschichtung aus den teilweise gehärteten Lack eine äußere Lage bildet.

Bei der Verwendung mindestens eines Zugstrangs, der mit dem teilweise gehärteten Lack beschichtet ist, wird vorzugsweise eine Anordnung erhalten, bei dem der Zugstrang mittels der Beschichtung auf einem unvulkanisierten Kautschukelement fixiert ist und zwischen dem unvulkanisierten Kautschukelement und einem zusätzlichen zweiten unvulkanisierten Kautschukelement angeordnet ist.

Die erhaltene Anordnung kann gegebenenfalls gepresst werden, um die Anordnung zu konsolidieren. Die Anordnung kann von der Unterlage abgenommen oder abgezogen werden. Nach Bedarf kann die erhaltene Anordnungen im Hinblick auf die zu verwendende Form auf eine passende Größe zurechtgeschnitten werden. Die erhaltene Anordnung kann alternativ zusammen mit der Unterlage in die Form gegeben werden.

In Schritt d) des erfindungsgemäßen Verfahrens wird die erhaltene Anordnung in eine Form eingebracht, wobei die Form bevorzugt eine innere Oberfläche aufweist, die profiliert ist.

Bei der Form handelt es sich um die üblichen Formen, die zum Formen und Vulkanisieren von Elastomerartikeln, wie Antriebsriemen, eingesetzt werden. Die Form kann z.B. eine Stahlform sein. Es kann sich z.B. um eine Vulkanisationskammer handeln. Die innere Oberfläche der Form ist bevorzugt eine profilierte Oberfläche. Das Profil der Oberfläche kann z.B. für die Fertigung eines Zahnriemens mit den Zähnen eines Zahnriemens oder für die Fertigung eines Keilrippenriemens mit den Rippen des Keilrippenriemens korrespondieren.

Sofern die Anordnung einen textilen Flächenkörper aufweist, der mit einer Beschichtung aus dem teilweise gehärteten Lack versehen ist, wird die Anordnung bevorzugt so in die Form gebracht, dass die Seite der Anordnung mit der Beschichtung aus dem teilweise gehärteten Lack der inneren Oberfläche der Form, bevorzugt der profilierten inneren Oberfläche der Form, zugewandt ist.

Die Form wird nach der Einbringung der Anordnung und vor der anschließenden Vulkanisation gewöhnlich verschlossen.

In Schritt e) des erfindungsgemäßen Verfahrens wird die Anordnung in der Form durch Wärmebehandlung und gegebenenfalls unter Druck vulkanisiert, wobei das Kautschukelement vulkanisiert und der teilweise gehärtete Lack thermisch fertig gehärtet wird.

Es ist bevorzugt, das die Anordnung vor und/oder während der Vulkanisation geformt wird. Dabei wird das Kautschukelement bzw. die Kautschukplatte vor und/oder während der Vulkanisation von einem Druck, der von der Mitte der Form ausgeübt wird, gegen die innere Oberfläche der Form gedrückt, wodurch im Fall einer profilierten Oberfläche das Kautschukelement in die Vertiefungen des Profils hineingedrückt wird. Auf diese Weise werden z.B. die Zähne eines Zahnriemens oder Rippen für einen Keilrippenriemen gebildet. Sofern die Anordnung einen textilen Flächenkörper aufweist, der mit einer Beschichtung aus dem teilweise gehärteten Lack versehen ist, wird der textile Flächenkörper ebenfalls in das Profil gedrückt, so dass die profilierte Oberfläche des Elastomerartikels mit dem textilen Flächenkörper ausgerüstet wird, der an der Oberfläche mit der Beschichtung aus dem gehärtetem Lack als Deckschicht versehen ist.

Die Temperatur zur Wärmebehandlung bei der Vulkanisation kann z.B. in Abhängigkeit von den eingesetzten Kautschukmischungen im Bereich von 140 bis 220 °C, bevorzugt 150 °C bis 200 °C, bevorzugter 160 °C bis 180 °C, liegen. Die Vulkanisationsdauer kann in weiten Bereichen variieren, z.B. kann sie im Bereich von 5 min bis 1 Stunde, bevorzugt 10 min bis 40 min, liegen.

Bei einer Vulkanisation unter Überdruck kann der Druck z.B. 6 bis 15 bar, bevorzugt 9 bis 12 bar, betragen.

Bei der Vulkanisation werden das oder die unvulkanisierten Kautschukelemente vulkanisiert und bilden einen Verbund. Bei der Vulkanisation wird gleichzeitig der teilweise gehärte strahlungshärtbare, bevorzugt UV-härtbare Lack thermisch fertig gehärtet bzw. ausgehärtet. Nach der thermischen Vervollständigung der Härtung ist der Lack kaum oder nicht mehr flexibel.

Nach der Vulkanisation wird gemäß Schritt f) des erfindungsgemäßen Verfahrens die vulkanisierte Anordnung aus der Form entnommen. Die entnommene Anordnung stellt den fertigen Elastomerartikel dar oder die entnommene Anordnung wird gegebenenfalls noch einer Nachbearbeitung unterworfen, um den Elastomerartikel zu erhalten.

In einer bevorzugten Ausführungsform des erfindungsgemäßen Verfahrens ist die in Schritt c) gebaute Anordnung ein Wickel, der eine erste unvulkanisierte Kautschukplatte als das unvulkanisierte Kautschukelement, eine zweite unvulkanisierte Kautschukplatte und mindestens einen zwischen den beiden Kautschukplatten angeordneten Zugstrang umfasst, wobei die jeweiligen Enden der beiden Kautschukplatten miteinander verbunden werden, um den Wickel zu bilden.

In einer bevorzugten Ausführungsform bei einem Elastomerartikel, der einen textilen Flächenkörper mit einer Beschichtung aus dem gehärteten Lack aufweist, ist der textile Flächenkörper auf einer Außenseite, bevorzugt einer profilierten Außenseite, des Körpers aus vulkanisiertem Kautschuk angeordnet und der gehärtete Lack bildet eine äußere Beschichtung des textilen Flächenkörpers bzw. eine Deckschicht. Diese Deckschicht aus dem gehärteten Lack ist besonders abriebfest und verschleißfest. Es ist besonders bevorzugt, dass der textile Flächenkörper mit der Deckschicht aus dem gehärteten Lack auf der Zähne oder Rippen bildenden Oberfläche eines Antriebsriemens angeordnet ist.

Ein besonderer Vorteil bei dem erfindungsgemäßen Verfahren, bei dem der textile Flächenkörper, z.B. ein Gewebe oder ein Gestrick, mit dem gehärteten Lack auf Basis des strahlungshärtbaren Lacks, bevorzugt härtbaren UV-Lacks, beschichtet ist, besteht darin, dass beim bevorzugten Einsatz eines im Wesentlichen lösungsmittelfreien oder besonders bevorzugt lösungsmittelfreien strahlungshärtbaren Lack, bevorzugt härtbaren UV-Lacks eine praktisch vollständige Verfüllung des textilen Flächenkörpers erreicht werden kann. Die praktisch vollständige Verfüllung ist darin begründet, das der strahlungshärtbare, bevorzugt UV-härtbare Lack bei Aufbringung in die Freiräume des textilen Flächenkörpers eindringt und bei den anschließenden Härtungsprozeduren praktisch keine Schwindung des Materials erfolgt, die bei den üblichen Systemen auf Lösungsmittelbasis durch die Verdampfung des Lösungsmittels unvermeidbar ist. Im Ergebnis wird ein hoher Verfüllungsgrad bzw. eine außerordentlich kompakte Beschichtung erhalten, die eine hohe Abriebfestigkeit und Verschleißfestigkeit aufweist zeigt.

In einer bevorzugten Ausführungsform, bei dem der Elastomerartikel mindestens einen Zugstrang aufweist, der mit dem gehärteten Lack beschichtet ist, ist der mindestens eine Zugstrang in einem Köper aus vulkanisiertem Kautschuk eingebettet.

Der Elastomerartikel, der nach dem erfindungsgemäßen Verfahren erhältlich ist, ist z.B. ein flexibler Behälter, ein Zelt, eine Plane, eine Membran, ein Schutzanzug, ein Drucktuch, ein Faltenbalg, eine Luftfeder, ein Gummi-FederElement, ein Antriebsriemen, ein Transportband, ein Fördergurt oder ein Schlauch. Es ist besonders bevorzugt, dass der Elastomerartikel ein Antriebsriemen, insbesondere ein Zahnriemen oder ein Keilrippenriemen, ist.

In einer Variante des erfindungsgemäßen Verfahrens ist der Festigkeitsträger, der mit dem gehärteten Lack auf Basis des strahlungshärtbaren, bevorzugt UV-härtbaren Lacks beschichtet ist, ein textiler Flächenkörper. In diesem Fall umfasst das erfindungsgemäße Verfahren bevorzugt folgende Schritte:
a) Aufbringen des strahlungshärtbaren, bevorzugt UV-härtbaren Lacks auf den textilen Flächenkörper, bevorzugt durch Tauchen oder Streichen,
b) teilweises Härten des aufgebrachten strahlungshärtbaren, bevorzugt UV-härtbaren Lacks durch Bestrahlung, bevorzugt UV-Bestrahlung,
c) Bauen der Anordnung, umfassend das unvulkanisierte Kautschukelement, bevorzugt die unvulkanisierte Kautschukplatte, und den mit dem teilweise gehärteten Lack beschichteten textilen Flächenkörper, der auf dem unvulkanisierten Kautschukelement angeordnet ist, wobei der teilweise gehärtete Lack auf dem textilen Flächenkörper eine Außenseite der Anordnung bildet,
d) Einbringen der Anordnung in eine Form, gegebenenfalls nach dem Zuschneiden der Anordnung auf eine passende Größe, so dass der teilweise gehärtete Lack der inneren Oberfläche der Form zugewandt ist, wobei die innere Oberfläche bevorzugt eine profilierte Oberfläche ist,
e) Vulkanisieren der Anordnung in der Form durch Wärmebehandlung und gegebenenfalls unter Druck, wobei das Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

Bei dieser Variante des erfindungsgemäßen Verfahrens ist es bevorzugt, dass das unvulkanisierte Kautschukelement eine erste unvulkanisierte Kautschukplatte ist und die Anordnung ferner eine zweite unvulkanisierte Kautschukplatte und mindestens einen Zugstrang umfasst und das Bauen der Anordnung gemäß Schritt c) das Auflegen der zweiten unvulkanisierten Kautschukplatte auf eine Trommel, bevorzugt eine drehbare Trommel, das Aufwickeln des mindestens einen Zugstrangs auf die aufgelegte zweite Kautschukplatte, das Auflegen der erste Kautschukplatte auf den aufgewickelten mindestens einen Zugstrang und das Auflegen des mit dem teilweise gehärteten Lack beschichteten textilen Flächenkörpers auf die erste Kautschukplatte umfasst, wobei die Beschichtung mit dem teilweise gehärteten Lack die äußere Lage der Anordnung bildet.

Wie vorstehend erörtert, ist es bevorzugt, dass vor und/oder während der Vulkanisation eine Formung der Anordnung stattfindet, insbesondere durch Eindrücken des Kautschukelements bzw. der Kautschukplatte und damit auch des textilen Flächenkörpers in die profilierte innere Oberfläche der Form.

In einer Variante des erfindungsgemäßen Verfahrens ist der Festigkeitsträger, der mit dem gehärteten Lack auf Basis des strahlungshärtbaren, bevorzugt UV-härtbaren Lacks beschichtet ist, mindestens ein Zugstrang. In diesem Fall umfasst das erfindungsgemäße Verfahren bevorzugt folgende Schritte:
a1) Bauen einer Teilanordnung, umfassend ein erstes unvulkanisiertes Kautschukelement, bevorzugt eine erste unvulkanisierte Kautschukplatte, und den mindestens einen Zugstrang, der auf dem unvulkanisierten Kautschukelement angeordnet ist,
a2) Aufbringen des strahlungshärtbaren, bevorzugt UV-härtbaren Lacks auf den mindestens einen, auf dem ersten unvulkanisierten Kautschukelement angeordneten Zugstrang, bevorzugt durch Sprühen oder Tauchen,
b) teilweises Härten des aufgebrachten strahlungshärtbaren, bevorzugt UV-härtbaren Lacks durch Bestrahlung, bevorzugt UV-Bestrahlung, um den mindestens einen Zugstrang auf dem ersten unvulkanisierten Kautschukelement zu fixieren,
c) Bauen der Anordnung, umfassend die in Schritt a1) erstellte Teilanordnung mit dem mindestens einen Zugstrang, der gemäß der Schritte a2) und b) mit dem teilweise gehärteten Lack beschichtet ist, und ein zweites unvulkanisiertes Kautschukelement, bevorzugt eine zweite unvulkanisierte Kautschukplatte, das auf den mindestens einen mit dem teilweise gehärteten Lack beschichteten Zugstrang angeordnet ist,
d) Einbringen der Anordnung in die Form, gegebenenfalls nach dem Zuschneiden der Anordnung auf eine passende Größe, wobei die Form bevorzugt eine profilierte Oberfläche aufweist,
e) Vulkanisieren der Anordnung in der Form durch Wärmebehandlung und gegebenenfalls unter Druck, wobei das erste und zweite Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

Bei dieser Variante des erfindungsgemäßen Verfahrens ist es bevorzugt, dass das erste unvulkanisierte Kautschukelement eine erste unvulkanisierte Kautschukplatte ist und das zweite unvulkanisierte Kautschukelement eine zweite unvulkanisierte Kautschukplatte ist, wobei
in Schritt a1) die Teilanordnung durch Auflegen der ersten unvulkanisierten Kautschukplatte auf eine Trommel, bevorzugt eine drehbare Trommel, und Aufwickeln des mindestens einen Zugstrangs auf die aufgelegte erste unvulkanisierten Kautschukplatte gebaut wird,
in Schritt a2) der strahlungshärtbare, bevorzugt UV-härtbare Lack auf dem mindestens einen, auf der ersten unvulkanisierten Kautschukplatte angeordneten Zugstrang aufgebracht wird, bevorzugt durch Sprühen oder Tauchen,
in Schritt b) der aufgebrachte strahlungshärtbare, bevorzugt UV-härtbare Lack durch Bestrahlung, bevorzugt UV-Bestrahlung teilweise gehärtet wird, um den mindestens einen Zugstrang auf der ersten unvulkanisierten Kautschukplatte zu fixieren,
in Schritt c) das Bauen der Anordnung das Auflegen der zweiten Kautschukplatte auf den mindestens einen mit dem teilweise gehärteten Lack fixierten Zugstrang umfasst.

Wie vorstehend erörtert, ist es bevorzugt, dass vor und/oder während der Vulkanisation eine Formung der Anordnung stattfindet, insbesondere durch Eindrücken des Kautschukelements bzw. der Kautschukplatte in die profilierte innere Oberfläche der Form.

Die Erfindung betrifft auch ein Elastomerartikel, umfassend einen Körper aus vulkanisiertem Kautschuk und mindestens einen Festigkeitsträger ausgewählt aus einem textilen Flächenkörper und einem Zugstrang, wobei der Festigkeitsträger mit einem gehärteten Lack beschichtet ist, wobei der Lack ein strahlungshärtbarer, bevorzugt UV-härtbarer Lack ist, der ein Bindemittel und einen Photoinitiator enthält.

Der strahlungshärtbare, bevorzugt UV-härtbare Lack ist dabei der Lack, der nach Härtung den gehärteten Lack bildet. Insbesondere wird der gehärtete Lack durch teilweise Vorhärtung des Lacks mittels Bestrahlung, insbesondere UV-Bestrahlung und anschließende thermische Endhärtung gebildet.

Der erfindungsgemäße Elastomerartikel ist vorzugsweise durch ein erfindungsgemäßes Verfahren wie vorstehend beschrieben erhältlich.

Bezüglich aller möglichen und bevorzugten Komponenten und Anordnungen des erfindungsgemäßen Elastomerartikels wird auf die entsprechenden Erläuterungen für das erfindungsgemäße Verfahren verwiesen, die in gleicher Weise gelten. Beispiele für spezielle Elastomerartikel sind vorstehend angegeben. Wie ausgeführt, ist der Elastomerartikel bevorzugt ein Antriebsriemen und besonders bevorzugt ein Zahnriemen oder ein Keilrippenriemen.

Die Erfindung betrifft ferner die Verwendung eines strahlungshärtbaren, bevorzugt UV-härtbaren Lacks in einem Elastomerartikel, der einen Körper aus vulkanisiertem Kautschuk und mindestens einen Festigkeitsträger ausgewählt aus einem textilen Flächenkörper und einem Zugstrang umfasst, zur Beschichtung des Festigkeitsträgers.

Der strahlungshärtbare, bevorzugt UV-härtbare Lack eignet sich insbesondere zur Beschichtung des textilen Flächenkörpers und/oder zur Beschichtung des Zugstrangs. Durch die Beschichtung des textilen Flächenkörpers kann insbesondere eine abriebfeste und verschleißfeste Deckbeschichtung erreicht werden. Durch die Beschichtung des Zugsstrangs kann insbesondere eine gute Fixierung des Zugstrangs im Körper aus vulkanisiertem Kautschuk des Elastomerartikels erreicht werden.

Die erfindungsgemäße Verwendung wird bevorzugt gemäß dem erfindungsgemäßen Verfahren wie vorstehend beschrieben durchgeführt.

Bezüglich aller möglichen und bevorzugten Komponenten und Anordnungen des strahlungshärtbaren, bevorzugt UV-härtbaren Lacks, des Kautschukelements für den Körper aus einem vulkanisierten Kautschuk und weiterer Einzelheiten wird auf die entsprechenden Erläuterungen für die erfindungsgemäßen Verfahren verwiesen, die in gleicher Weise für die erfindungsgemäße Verwendung gelten.

Die Erfindung wird nun anhand von Ausführungsbeispielen unter Bezugnahme auf eine schematische Zeichnung weiter erläutert, was die Erfindung in keiner Weise beschränken soll.

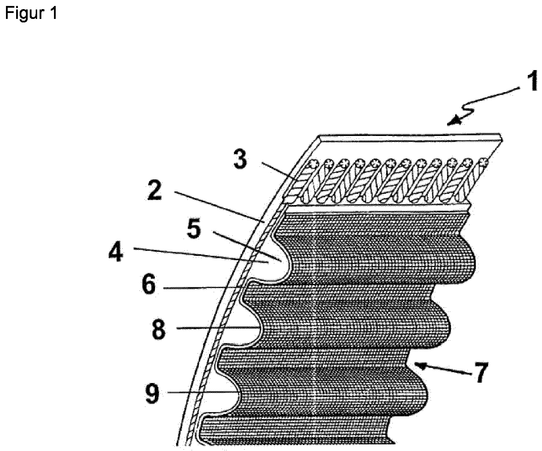

Figur 1 zeigt eine schematische dreidimensionale Teildarstellung eines Beispiels für einen erfindungsgemäßen Elastomerartikel in Form eines Zahnriemens mit Draufsicht auf die Kraftübertragungszone 7. Der Zahnriemen weist eine Decklage 2 als Riemenrücken, einen eingebetteten Festigkeitsträger in Form von Zugsträngen 3 sowie einen Unterbau 4 auf. Der Zugstrang 3 kann z.B. aus einem Cord aus Polyamid, Aramid, oder Polyester und insbesondere aus Glas oder Carbon oder einer Mischung, wie z.B. einem Glas/Carbon-Hybrid, gebildet sein.

Die Decklage 2 und der Unterbau 4 bilden als Gesamteinheit den elastischen bzw. elastomeren Körper 1 aus vulkanisiertem Kautschuk.

Der Unterbau 4 ist mit einer zahnförmigen Profilierung, umfassend Zähne 5 und Zahnstege 6, versehen und bildet die Kraftübertragungszone 7, die besonders verschleißanfällig ist durch Abrieb und den Einfluss von Ölen. Aus diesem Grunde ist die Kraftübertragungszone mit einem textilem Flächenkörper 8 ausgestattet, der z.B. ein Gewebe oder Gestrick sein kann, wobei Gewebe bevorzugt ist, insbesondere bei einem Zahnriemen. Der textile Flächenkörper kann z.B. aus Polyamid, z.B. Nylon, Polyester, Elastan, Baumwolle, Aramid oder einer Kombination davon gebildet sein.

Der textile Flächenkörper ist mit einer Beschichtung 9 aus gehärtetem Lack auf Basis des erfindungsgemäß eingesetzten strahlungshärtbaren Lacks, hier ein UV-härtbarer Lack, versehen. Durch diese Deckschicht ist der Zahnriemen besonders abriebfest und verschleißfest.

Die Beschichtung 9 wird aus einem UV-härtbaren Lack gebildet, der im Rahmen des erfindungsgemäßen Verfahrens zur Herstellung des Zahnriemens durch teilweise UV-Härtung und thermische Endhärtung gehärtet wurde. Der UV-härtbare Lack kann z.B. ein lösungsmittelfreier Acryllack sein, der einen Photoinitiator enthält, z.B. TPO, TPO-L oder IPX. Dem UV-härtbaren Lack kann gegebenenfalls ein thermischer Initiator, bevorzugt eine Peroxidverbindung, zugesetzt werden.

In den folgenden beispielhaften Ausführungsbeispielen wird die Erfindung weiter veranschaulicht. Sie sollen die Erfindung aber in keiner Weise beschränken.
A. Allgemeine Formulierung für einen UV-härtbaren Lack
   ∘ UV-Bindemittel, z.B. acrylierte Oligomere, Urethanacrylate, Polyesteracrylate oder Epoxyacrylate
   ∘**monomere** Reaktionspartner, z.B. HDDA, DPGDA, TMPTA, Mono-, Di- oder Triacrylate
   ∘ Additive, z.B. Entschäumer, Entlüfter, feste und dispergierte Wachse, Tenside, Gleitmittel, Silicone oder Kombinationen davon
   ∘ LED-Photoinitiator für die typischen Wellenlängen 365, 385, 395, 405 nm (z.B. TPOL, TPO oder ITX), gegebenenfalls Aminbooster als Sauerstofffänger bei Typ II-Photoinitiatoren
   ∘ gegebenenfalls thermischer Initiator (z.B. Peroxid oder Isocyanat) für Dualcure-Systeme
B. Herstellungsverfahren Zahnriemen mit Textil
   a) Eigenschaften / Verfahren des Grundtextils mit UV-Beschichtung:
      ∘ UV-härtbarer Lack flüssig auf Textil / Festigkeitsträger auftragbar, 50 -200 g/m² (je nach Riementyp) auf Oberfläche
      ∘ auf unterschiedlichen Textilien, z.B. Nylon, Baumwolle, Aramid, Elastan, PES, Rayon, Tencel, Vlies und Kombinationen davon
      ∘ Viskosität des aufzutragenden Lacks sehr variabel von dünn bis dick (5 - 5000 Centipoise)
      o UV-Lack einseitig mit einem Messer/Rakel auftragen, aber auch beidseitiges Tauchen möglich
      ∘ Benetzung des Textils
      ∘ UV-Vorbehandlung mit LED-UV-Lampe (UV-Bestrahlung)
         - die Beschichtung auf dem Textil wird teilweise gehärtet, so dass die gewünschten Eigenschaften erhalten werden
         - die teilgehärtete Beschichtung soll eine hohe Elastizität aufweisen (dehnbar für die Weiterverarbeitung)
         - die teilgehärtete Beschichtung soll noch "griff- / staubtrocken" ("finger / touch dry") sein
         - UV-Härtung wird durch die Menge an Photoinitiator, die Transportgeschwindigkeit und die Menge der UV-Strahlungsdosis der LED-Lampen beeinflusst
      ∘ fertiges Halbzeug = "ein beschichtetes, teilweise UV-gehärtetes Textil".
   b) Riemenaufbau mit Halbzeug mit dem beschichteten teilweise UV-gehärteten Textil:
      ∘ Metalltrommel für Zahnriemen
      ∘ Halbzeug mit der Seite mit teilweise UV-gehärteter Beschichtung "innen" gegen die Form auflegen
      ∘ Wickeln von Cord / Zugstrangträger auf die Außenseite des Halbzeugs
      ∘ Aufbringen einer Kautschukmischungs-Platte
      ∘ Ausüben von Druck und Konsolidieren
      ∘ Einbringen der ganzen Einheit (Wickel auf der Zahnriementrommel) in die Form für Druckanwendung
      ∘ Ausüben von Druck von außen zur Mitte hin in der Form, der die Kautschukplatte durch die gewickelte Cordlage und gegen das Textil in die Zähne der Form drückt
      ∘ Erwärmen auf 180°C für 20 Minuten für die endgültige Härtung
      C. Herstellung von Keilrippenriemen mit Cord-Sprühverfahren

Als UV-härtbarer Lack wird eine Formulierung wie unter A. beschrieben eingesetzt. Der Riemenaufbau wird wie folgt durchgeführt
∘Auflegen einer Kautschukcompound-Platte für die Rückseite auf Metalltrommel
∘Wickeln eines Cords auf das Kautschukcompound für die Rückseite, wobei die Trommel gedreht wird, wenn der Cord / Zugstrang aufgewickelt wird
o Während sich die Trommel dreht wird der UV-Lack gleichzeitig auf Cord und die Kautschukoberfläche aufgetragen
   - Aufsprühen des UV-Lacks, wobei sowohl der Cord als auch die Kautschukoberfläche gleichzeitig beschichtet werden
   - Alternativ oder zusätzlich wird vor dem Aufwickeln der Cord durch ein kleines Bad geführt, um den UV-Lack aufzubringen
∘ Nach dem Auftragen des UV-Lacks, während sich die Trommel noch dreht, Bestrahlen mit UV-LED-Licht, um den UV-Lack teilweise zu härten, um den gewünschten Aushärtungsgrad zu erhalten. Die Corde werden auf diese Weise fixiert.
∘ Ausüben von Druck und Konsolidieren aller Teile miteinander unter Bildung der Wickel
∘ Abnehmen der Wickel von der Trommel
∘ Einlegen der Wickel in eine Multi-V-Form (Rippen innerhalb der Form). Druck, der von der Mitte der Form aus angelegt wird, drückt die Kautschukplatten gegen die Stahlform und bildet so die Rippen
∘ Erwärmen auf 180°C für 20 Minuten für die endgültige Härtung

Das Verfahren ist auch für Keilrippenriemen nach dem Schleifverfahren geeignet. Dabei wird eine Form mit ebener Innenoberfläche verwendet, die Rippen werden nach der Vulkanisation in den Riemen eingeschliffen.

### Bezugszeichenliste:

- 1: Körper aus vulkanisiertem Kautschuk
- 2: Decklage des Körpers als Riemenrücken
- 3: Festigkeitsträger in Form von Zugsträngen
- 4: Unterbau des Körpers
- 5: Zahn des Körpers
- 6: Zahnsteg des Körpers
- 7: Kraftübertragungszone
- 8: textiler Flächenkörper
- 9: Beschichtung aus gehärtetem Lack auf Basis eines UV-härtbaren Lacks

## Patentansprüche

1. Verfahren zur Herstellung eines Elastomerartikels, umfassend einen Körper aus vulkanisiertem Kautschuk und mindestens einen Festigkeitsträger ausgewählt aus einem textilen Flächenkörper und einem Zugstrang, wobei der Festigkeitsträger mit einem gehärteten Lack beschichtet ist, wobei das Verfahren folgende Schritte umfasst:
a) Aufbringen eines strahlungshärtbaren, bevorzugt UV-härtbaren Lacks, der mindestens ein Bindemittel und einen Photoinitiator enthält, auf den Festigkeitsträger,
b) teilweises Härten des aufgebrachten strahlungshärtbaren, bevorzugt UV-härtbaren Lacks durch Bestrahlung, bevorzugt UV-Bestrahlung,
c) Bauen einer Anordnung, umfassend ein unvulkanisiertes Kautschukelement bevorzugt eine unvulkanisierte Kautschukplatte, und den Festigkeitsträger, der auf dem unvulkanisierten Kautschukelement angeordnet ist, wobei die Anordnung oder eine Teilanordnung, umfassend das unvulkanisierte Kautschukelement und den Festigkeitsträger, vor oder nach dem Aufbringen des strahlungshärtbaren, bevorzugt UV-härtbaren Lacks auf den Festigkeitsträger und dem teilweisen Härten gemäß der Schritte a) und b) gebaut wird,
d) Einbringen der Anordnung in eine Form, gegebenenfalls nach dem Zuschneiden der Anordnung auf eine passende Größe, wobei die Form bevorzugt eine profilierte Oberfläche aufweist,
e) Vulkanisieren der Anordnung in der Form durch Wärmebehandlung und gegebenenfalls unter Druck, wobei das Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

2. Verfahren nach Anspruch 1, wobei
das Bindemittel aus Acrylaten, Methacrylaten, Epoxiden, ungesättigten Polyestern oder einer Kombination davon ausgewählt ist, und/oder
der Photoinitiator aus Benzoinethern, Benzil-monoketalen, α-substituierten Acetophenon-Derivaten, Phenylglyoxylsäureestern, α-Acyloximestern, Acylphosphinoxiden, Benzophenonen, Thioxanthonen oder einer Kombination davon ausgewählt ist, wobei α-substituierte Acetophenon-Derivate, Acylphosphinoxide und Thioxanthone bevorzugt sind.

3. Verfahren nach einem der vorhergehenden Ansprüche, wobei der strahlungshärtbare, bevorzugt UV-härtbare Lack im Wesentlichen frei oder frei von Lösungsmitteln ist, und/oder
wobei der strahlungshärtbare, bevorzugt UV-härtbare Lack ferner einen thermischen Initiator umfasst, der bevorzugt eine Peroxidverbindung ist.

4. Verfahren nach einem der vorhergehenden Ansprüche, wobei der textile Flächenkörper ein Gewebe, ein Gewirke oder ein Gestrick ist, und/oder der mindestens eine Zugstrang aus Stahlcord, Polyestercord, Polyamidcord, Aramidcord, Glascord, Carboncord, Polyetheretherketon-Cord, Polyethylen-2,6-naphthalat-Cord, Baumwollcord, Rayon-Cord, Tencel-Cord oder einer Kombination davon ausgewählt ist.

5. Verfahren nach einem der vorhergehenden Ansprüche,
wobei die UV-Bestrahlung mittels einer oder mehrerer UV-Licht emittierender LED-Lampen erfolgt, und/oder
wobei die UV-Bestrahlung in einem Wellenlängenbereich von 270 bis 415 nm erfolgt.

6. Verfahren nach einem der vorhergehenden Ansprüche,
wobei der textile Flächenkörper auf einer Außenseite, bevorzugt einer profilierten Außenseite, des Elastomerartikels auf dem Körper aus vulkanisiertem Kautschuk angeordnet ist und der gehärtete Lack eine äußere Beschichtung des textilen Flächenkörpers bildet, und/oder
der mindestens eine Zugstrang, der mit dem gehärteten Lack beschichtet ist, in einem Köper aus vulkanisiertem Kautschuk eingebettet ist.

7. Verfahren nach einem der vorhergehenden Ansprüche, wobei der Elastomerartikel ein flexibler Behälter, ein Zelt, eine Plane, eine Membran, ein Schutzanzug, ein Drucktuch, ein Faltenbalg, eine Luftfeder, ein Gummi-FederElement, ein Antriebsriemen, ein Transportband, ein Fördergurt oder ein Schlauch ist, wobei der Elastomerartikel bevorzugt ein Antriebsriemen, insbesondere ein Zahnriemen oder ein Keilrippenriemen, ist.

8. Verfahren nach einem der vorhergehenden Ansprüche, wobei der Festigkeitsträger ein textiler Flächenkörper ist, wobei das Verfahren folgende Schritte umfasst:
a) Aufbringen des strahlungshärtbaren, bevorzugt UV-härtbaren Lacks auf den textilen Flächenkörper, bevorzugt durch Tauchen oder Streichen,
b) teilweises Härten des aufgebrachten strahlungshärtbaren, bevorzugt UV-härtbaren Lacks durch Bestrahlung, bevorzugt UV-Bestrahlung,
c) Bauen der Anordnung, umfassend das unvulkanisierte Kautschukelement, bevorzugt die unvulkanisierte Kautschukplatte, und den mit dem teilweise gehärteten Lack beschichteten textilen Flächenkörper, der auf dem unvulkanisierten Kautschukelement angeordnet ist, wobei der teilweise gehärtete Lack auf dem textilen Flächenkörper eine Außenseite der Anordnung bildet,
d) Einbringen der Anordnung in eine Form, gegebenenfalls nach dem Zuschneiden der Anordnung auf eine passende Größe, so dass der teilweise gehärtete Lack der inneren Oberfläche der Form zugewandt ist, wobei die innere Oberfläche bevorzugt eine profilierte Oberfläche ist,
e) Vulkanisieren der Anordnung in der Form durch Wärmebehandlung und gegebenenfalls unter Druck, wobei das Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

9. Verfahren nach Anspruch 8, wobei das unvulkanisierte Kautschukelement eine erste unvulkanisierte Kautschukplatte ist und die Anordnung ferner eine zweite unvulkanisierte Kautschukplatte und mindestens einen Zugstrang umfasst und das Bauen der Anordnung gemäß Schritt c) das Auflegen der zweiten unvulkanisierten Kautschukplatte auf eine Trommel, bevorzugt eine drehbare Trommel, das Aufwickeln des mindestens einen Zugstrangs auf die aufgelegte zweite Kautschukplatte, das Auflegen der erste Kautschukplatte auf den aufgewickelten mindestens einen Zugstrang und das Auflegen des mit dem teilweise gehärteten Lack beschichteten textilen Flächenkörpers auf die erste Kautschukplatte umfasst, wobei die Beschichtung mit dem teilweise gehärteten Lack die äußere Lage der Anordnung bildet.

10. Verfahren zur Herstellung eines Elastomerartikels nach einem der Ansprüche 1 bis 7, wobei der mindestens einen Festigkeitsträger mindestens ein Zugstrang ist, wobei das Verfahren folgende Schritte umfasst:
a1) Bauen einer Teilanordnung, umfassend ein erstes unvulkanisiertes Kautschukelement, bevorzugt eine erste unvulkanisierte Kautschukplatte, und den mindestens einen Zugstrang, der auf dem unvulkanisierten Kautschukelement angeordnet ist,
a2) Aufbringen des strahlungshärtbaren, bevorzugt UV-härtbaren Lacks auf den mindestens einen, auf dem ersten unvulkanisierten Kautschukelement angeordneten Zugstrang, bevorzugt durch Sprühen oder Tauchen,
b) teilweises Härten des aufgebrachten strahlungshärtbaren, bevorzugt UV-härtbaren Lacks durch Bestrahung, bevorzugt UV-Bestrahlung, um den mindestens einen Zugstrang auf dem ersten unvulkanisierten Kautschukelement zu fixieren,
c) Bauen der Anordnung, umfassend die in Schritt a1) erstellte Teilanordnung mit dem mindestens einen Zugstrang, der gemäß der Schritte a2) und b) mit dem teilweise gehärteten Lack beschichtet ist, und ein zweites unvulkanisiertes Kautschukelement, bevorzugt eine zweite unvulkanisierte Kautschukplatte, das auf den mindestens einen mit dem teilweise gehärteten Lack beschichteten Zugstrang angeordnet ist,
d) Einbringen der Anordnung in die Form, gegebenenfalls nach dem Zuschneiden der Anordnung auf eine passende Größe, wobei die Form bevorzugt eine profilierte Oberfläche aufweist,
e) Vulkanisieren der Anordnung in der Form durch Wärmebehandlung und gegebenenfalls unter Druck, wobei das erste und zweite Kautschukelement vulkanisiert und der teilweise gehärtete Lack thermisch fertig gehärtet wird,
f) Entnehmen der Anordnung aus der Form, um gegebenenfalls nach einer Nachbearbeitung der entnommenen Anordnung den Elastomerartikel zu erhalten.

11. Verfahren nach Anspruch 10, wobei das erste unvulkanisierte Kautschukelement eine erste unvulkanisierte Kautschukplatte ist und das zweite unvulkanisierte Kautschukelement eine zweite unvulkanisierte Kautschukplatte ist und wobei
in Schritt a1) die Teilanordnung durch Auflegen der ersten unvulkanisierten Kautschukplatte auf eine Trommel, bevorzugt eine drehbare Trommel, und Aufwickeln des mindestens einen Zugstrangs auf die aufgelegte erste unvulkanisierten Kautschukplatte gebaut wird,
in Schritt a2) der strahlungshärtbare, bevorzugt UV-härtbare Lack auf dem mindestens einen, auf der ersten unvulkanisierten Kautschukplatte angeordneten Zugstrang aufgebracht wird, bevorzugt durch Sprühen,
in Schritt b) der aufgebrachte strahlungshärtbare, bevorzugt UV-härtbare Lack durch Bestrahlung, bevorzugt UV-Bestrahlung teilweise gehärtet wird, um den mindestens einen Zugstrang auf der ersten unvulkanisierten Kautschukplatte zu fixieren,
in Schritt c) das Bauen der Anordnung das Auflegen der zweiten Kautschukplatte auf den mindestens einen mit dem teilweise gehärteten Lack fixierten Zugstrang umfasst.

12. Elastomerartikel, umfassend einen Körper aus vulkanisiertem Kautschuk und mindestens einen Festigkeitsträger ausgewählt aus einem textilen Flächenkörper und einem Zugstrang, wobei der Festigkeitsträger mit einem gehärteten Lack beschichtet ist, wobei der Lack ein strahlungshärtbarer, bevorzugt UV-härtbarer Lack ist, der ein Bindemittel und einen Photoinitiator enthält, wobei der Elastomerartikel bevorzugt durch ein Verfahren nach einem der Ansprüche 1 bis 11 erhältlich ist.

13. Elastomerartikel nach Anspruch 12, wobei der gehärtete Lack durch teilweise Vorhärtung des strahlungshärtbaren, bevorzugt UV-härtbaren Lacks mittels Bestrahlung, bevorzugt UV-Bestrahlung und anschließende thermische Aushärtung gebildet ist.

14. Elastomerartikel nach Anspruch 12 oder 13, wobei
das Bindemittel und/oder der Photoinitiator wie in Anspruch 2 definiert sind, und/oder
der strahlungshärtbare, bevorzugt UV-härtbare Lack wie in Anspruch 3 definiert ist, und/oder
der Festigkeitsträger wie in Anspruch 4 definiert sind, und/oder der Elastomerartikel wie in Anspruch 6 oder 7 definiert ist.

15. Verwendung eines strahlungshärtbaren, bevorzugt UV-härtbaren Lacks in einem Elastomerartikel, der einen Körper aus vulkanisiertem Kautschuk und mindestens einen Festigkeitsträger ausgewählt aus einem textilen Flächenkörper und einem Zugstrang umfasst, zur Beschichtung des Festigkeitsträgers.

## Claims

1. A method for the manufacture of an elastomer article, comprising a body of vulcanised rubber and at least one strength member selected from a textile surface body and a tensile member, wherein the strength member is coated with a hardened varnish, the method comprising the following steps:
a) Application of a radiation-hardenable, preferably UV-curable varnish containing at least one binder and one photoinitiator to the strength carrier,
b) partial curing of the applied radiation-hardenable, preferably UV-curable varnish by irradiation, preferably UV irradiation,
c) Building an assembly comprising an unvulcanized rubber element prefers an unvulcanized rubber plate, and the strength member arranged on the unvulcanized rubber element, wherein the assembly or a partial assembly, comprising the unvulcanized rubber element and the strength member, is built before or after the application of the radiation-hardenable, preferably UV-curable varnish to the reinforcement and partial hardening in accordance with steps a) and b) becomes
d) Inserting the arrangement into a mold, if necessary after cutting the arrangement to a suitable size, with the mold preferably having a profiled surface,
e) vulcanization of the arrangement in the mold by heat treatment and, if necessary, under pressure, vulcanizing the rubber element and thermally curing the partially hardened paint,
f) Remove the assembly from the mold in order to obtain the elastomer article after post-processing of the removed assembly, if necessary.

2. The method of claim 1, wherein
the binder is selected from acrylates, methacrylates, epoxies, unsaturated polyesters or a combination thereof, and/or
the photoinitiator is selected from benzoin ethers, benzil monoketals, α-substituted acetophenone derivatives, phenylglyoxylic acid esters, α-acyloxime esters, acylphosphine oxides, benzophenones, thioxanthones, or a combination thereof, preferring α-substituted acetophenone derivatives, acylphosphine oxides, and thioxanthones.

3. Method according to any of the preceding claims, wherein
the radiation-curable, preferably UV-curable varnish is substantially free or solvent-free, and/or the radiation-curable, preferably UV-curable varnish also includes a thermal initiator, which is preferably a peroxide compound.

4. Method according to any of the preceding claims, wherein
the textile surface is a fabric, a knitted fabric or a knitted fabric, and/or which has selected at least one tension cord of steel cord, polyester cord, polyamide cord, aramid cord, glass cord, carbon cord, polyetheretherketone cord, polyethylene 2,6-naphthalate cord, cotton cord, rayon cord, Tencel cord or a combination thereof.

5. Method according to one of the preceding claims,
where the UV irradiation is carried out by means of one or more UV light-emitting LED lamps, and/or
whereby the UV irradiation takes place in a wavelength range of 270 to 415 nm.

6. Method according to any of the preceding claims,
wherein the textile surface body is arranged on an outside, preferably a profiled outside, of the elastomer article on the body of vulcanised rubber and the hardened varnish forms an outer coating of the textile surface body, and/or at least one tensile cord coated with the hardened paint is embedded in a vulcanized rubber twill.

7. A method according to any of the preceding claims, wherein the elastomer article is a flexible container, a tent, a tarpaulin, a membrane, a protective suit, a pressure blanket, a bellows, an air spring, a rubber-spring element, a drive belt, a conveyor belt, a conveyor belt or a hose, wherein the elastomer article is preferably a drive belt, in particular a timing belt or a V-ribbed belt.

8. A method according to any of the preceding claims, wherein the reinforcement is a textile surface body, wherein the method comprises the following steps:
a) Application of the radiation-hardenable, preferably UV-curable varnish to the textile surface body, preferably by dipping or painting,
b) partial curing of the applied radiation-hardenable, preferably UV-curable varnish by irradiation, preferably UV irradiation,
c) construction of the assembly, comprising the unvulcanized rubber element, preferably the unvulcanized rubber panel, and the textile surface body coated with the partially hardened varnish, which is arranged on the unvulcanized rubber element, wherein the partially cured varnish on the textile surface body forms an outside of the assembly,
d) Placing the assembly in a mold, if necessary after cutting the assembly to a suitable size, so that the partially hardened varnish faces the inner surface of the mold, the inner surface being preferably a profiled surface,
e) vulcanization of the arrangement in the mold by heat treatment and, if necessary, under pressure, vulcanizing the rubber element and thermally curing the partially hardened paint,
f) Remove the assembly from the mold in order to obtain the elastomer article after post-processing of the removed assembly, if necessary.

9. The method of claim 8, wherein the unvulcanized rubber element is a first unvulcanized rubber plate and the arrangement further comprises a second unvulcanized rubber plate and at least one tensile cord, and the construction of the assembly according to step (c) the placement of the second unvulcanized rubber plate on a drum, preferably a rotating drum, the winding of at least one tension cord on the superimposed second rubber plate, the placement of the first rubber sheet on the coiled surface comprises at least one tensile cord and the placement of the textile surface body coated with the partially hardened varnish on the first rubber plate, the coating with the partially hardened varnish forming the outer layer of the assembly.

10. A method for the manufacture of an elastomer article according to any one of claims 1 to 7, wherein the at least one strength member is at least one tensile member, wherein the method comprises the following steps:
a1) Building a partial assembly, comprising a first unvulcanized rubber element, preferably a first unvulcanized rubber plate, and at least one tensile cord arranged on the unvulcanized rubber element,
a2) Application of the radiation-hardenable, preferably UV-curable varnish to at least one tensile cord arranged on the first unvulcanized rubber element, preferably by spraying or dipping,
b) partial curing of the applied radiation-hardenable, preferably UV-curable varnish by radiation, preferably UV irradiation to fix at least one tensile strand on the first unvulcanized rubber element,
c) Construction of the assembly, comprising the partial assembly created in step a1) with at least one tensile cord coated with the partially hardened paint in accordance with steps a2) and b) and a second unvulcanized rubber element, preferably a second unvulcanized rubber plate arranged on at least one tensile cord coated with the partially hardened paint,
d) Insertion of the arrangement into the mould, if necessary after cutting the arrangement to a suitable size, where the mould preferably has a profiled surface,
e) vulcanization of the arrangement in the mold by heat treatment and, if necessary, under pressure, vulcanizing the first and second rubber elements and thermally curing the partially hardened paint,
f) Remove the assembly from the mold in order to obtain the elastomer article after post-processing of the removed assembly, if necessary.

11. The method of claim 10, wherein the first unvulcanized rubber element is a first unvulcanized rubber plate and the second unvulcanized rubber element is a second unvulcanized rubber plate, and wherein
in step (a1) the partial assembly is built by placing the first unvulcanized rubber plate on a drum, preferably a rotating drum, and winding the first unvulcanized rubber plate on top of the first unvulcanized rubber plate,
in step a2) the radiation-hardenable, preferably UV-curable varnish is applied to at least one tensile cord arranged on the first unvulcanized rubber plate, preferably by spraying,
in step b) the applied radiation-hardenable, preferably UV-curable varnish is partially cured by irradiation, preferably UV irradiation, in order to fix at least one tensile strand on the first unvulcanized rubber plate,
in step c) the construction of the assembly includes the placement of the second rubber plate on at least one tension cord fixed with the partially hardened paint.

12. An elastomer article comprising a body of vulcanised rubber and at least one strength member selected from a textile surface body and a tensile member, wherein the strength member is coated with a hardened varnish, wherein the varnish is a radiation-curable varnish, preferably UV-curable, comprising a binder and a photoinitiator, wherein the elastomer article is preferably obtained by a process according to one of claims 1 to 11.

13. An elastomer article according to claim 12, wherein the hardened varnish is formed by partial pre-curing of the radiation-hardenable, preferably UV-curable varnish by means of irradiation, preferably UV irradiation and subsequent thermal curing.

14. Elastomer article according to claim 12 or 13, wherein
the binder and/or the photoinitiator as defined in claim 2, and/or
the radiation-curable, preferably UV-curable varnish as defined in claim 3, and/or
the strength members as defined in claim 4, and/or
the elastomer article as defined in claim 6 or 7.

15. Use of a radiation-hardenable, preferably UV-curable varnish in an elastomer article comprising a body of vulcanized rubber and at least one strength member selected from a textile surface body and a tensile cord to coat the strength carrier.

## Revendications

1. Procédé de fabrication d'un article en élastomère, comprenant un corps en caoutchouc vulcanisé et au moins un élément de résistance choisi dans un corps de surface textile et un élément de traction, dans lequel l'élément de résistance est recouvert d'un vernis durci, le procédé comprenant les étapes suivantes :
a) Application sur le support de résistance un vernis durcissable aux rayonnements, de préférence durcissable aux UV, contenant au moins un liant et un photo-initiateur,
b) durcissement partiel du vernis durcissable aux rayonnements, de préférence durcissable aux UV, par irradiation, de préférence par rayonnement UV,
c) La construction d'un ensemble comprenant un élément en caoutchouc non vulcanisé préfère une plaque en caoutchouc non vulcanisé, et l'élément de résistance disposé sur l'élément en caoutchouc non vulcanisé, dans lequel l'ensemble ou un ensemble partiel, comprenant l'élément en caoutchouc non vulcanisé et l'élément de résistance, est construit avant ou après l'application du vernis durcissable par rayonnement, de préférence durcissable aux UV, sur le renforcement et le durcissement partiel conformément aux étapes a) et b) Devient
d) Insertion de l'arrangement dans un moule, si nécessaire après avoir coupé l'arrangement à une taille appropriée, le moule ayant de préférence une surface profilée,
e) vulcanisation de l'agencement dans le moule par traitement thermique et, si nécessaire, sous pression, vulcanisation de l'élément en caoutchouc et durcissement thermique de la peinture partiellement durcie,
f) Retirer l'ensemble du moule afin d'obtenir l'article en élastomère après post-traitement de l'ensemble retiré, si nécessaire.

2. Procédé selon la revendication 1, dans lequel
le liant est choisi parmi des acrylates, des méthacrylates, des époxydes, des polyesters insaturés ou une combinaison de ceux-ci, et/ou
Le photoinitiateur est choisi parmi les éthers de benjoin, les monocètes de benzil, les dérivés d'acétophénone α-substitués, les esters d'acide phénylglyoxylique, les esters de α-acyloxime, les oxydes d'acylphosphine, les benzophénones, les thioxanthones ou une combinaison de ceux-ci, préférant les dérivés d'acétophénone α-substitués, les oxydes d'acylphosphine et les thioxanthones.

3. Procédé selon l'une quelconque des revendications précédentes, dans lequel le vernis durcissable aux rayonnements, de préférence aux UV, est pratiquement libre ou sans solvant, et/ou le vernis durcissable aux rayonnements, de préférence résistant aux UV, comprend également un initiateur thermique, qui est de préférence un composé de peroxyde.

4. Procédé selon l'une quelconque des revendications précédentes, dans lequel la surface textile est un tissu, un tricot ou un tricot, et/ou
qui a choisi au moins un cordon de tension composé d'un câble d'acier, d'un cordon en polyester, d'un cordon en polyamide, d'un cordon en aramide, d'un cordon en verre, d'un cordon en carbone, d'un cordon en polyétheréthercétone, d'un cordon en polyéthylène 2,6-naphtalate, d'un cordon en coton, d'un cordon en rayonne, d'un cordon en Tencel ou d'une combinaison de ceux-ci.

5. Procédé selon l'une des revendications précédentes,
lorsque l'irradiation UV est effectuée au moyen d'une ou de plusieurs lampes à LED électroluminescentes UV, et/ou
l'irradiation UV s'effectue dans une gamme de longueurs d'onde de 270 à 415 nm.

6. Procédé selon l'une quelconque des revendications précédentes,
dans lequel le corps de surface textile est disposé sur un extérieur, de préférence un extérieur profilé, de l'article en élastomère sur le corps du caoutchouc vulcanisé et le vernis durci forme un revêtement extérieur du corps de surface textile, et/ou Au moins un cordon de traction recouvert de peinture durcie est noyé dans un sergé de caoutchouc vulcanisé.

7. Procédé selon l'une quelconque des revendications précédentes, dans lequel l'article en élastomère est un récipient souple, une tente, une bâche, une membrane, une combinaison de protection, une couverture de pression, un soufflet, un ressort pneumatique, un élément à ressort en caoutchouc, une courroie d'entraînement, une bande transporteuse, une bande transporteuse ou un tuyau, l'article en élastomère étant de préférence une courroie d'entraînement, en particulier une courroie dentée ou une courroie à nervures en V.

8. Procédé selon l'une quelconque des revendications précédentes, dans lequel le renfort est un corps de surface textile, dans lequel le procédé comprend les étapes suivantes :
a) Application du vernis durcissable aux rayonnements, de préférence durcissable aux UV, sur le corps de la surface textile, de préférence par trempage ou peinture,
b) durcissement partiel du vernis durcissable aux rayonnements, de préférence durcissable aux UV, par irradiation, de préférence par rayonnement UV,
c) construction de l'ensemble, comprenant l'élément en caoutchouc non vulcanisé, de préférence le panneau en caoutchouc non vulcanisé, et le corps de surface textile recouvert d'un vernis partiellement durci, qui est disposé sur l'élément en caoutchouc non vulcanisé, dans lequel le vernis partiellement durci sur le corps de surface textile forme un extérieur de l'ensemble,
d) Placer l'ensemble dans un moule, si nécessaire après avoir découpé l'ensemble à une taille appropriée, de sorte que le vernis partiellement durci fasse face à la surface intérieure du moule, la surface intérieure étant de préférence une surface profilée,
e) vulcanisation de l'agencement dans le moule par traitement thermique et, si nécessaire, sous pression, vulcanisation de l'élément en caoutchouc et durcissement thermique de la peinture partiellement durcie,
f) Retirer l'ensemble du moule afin d'obtenir l'article en élastomère après post-traitement de l'ensemble retiré, si nécessaire.

9. Procédé selon la revendication 8, dans lequel l'élément en caoutchouc non vulcanisé est une première plaque de caoutchouc non vulcanisé et l'arrangement comprend en outre une seconde plaque de caoutchouc non vulcanisé et au moins un cordon de traction, et la construction de l'ensemble selon l'étape (c) le placement de la deuxième plaque de caoutchouc non vulcanisé sur un tambour, de préférence un tambour rotatif, l'enroulement d'au moins un cordon de tension sur la deuxième plaque de caoutchouc superposée, La mise en place de la première feuille de caoutchouc sur la surface enroulée comprend au moins un cordon de traction et la mise en place du corps de la surface textile enduit du vernis partiellement durci sur la première plaque de caoutchouc, le revêtement avec le vernis partiellement durci formant la couche extérieure de l'ensemble.

10. Procédé de fabrication d'un article en élastomère selon l'une quelconque des revendications 1 à 7, dans lequel l'au moins un élément de résistance est au moins un élément de traction, dans lequel le procédé comprend les étapes suivantes :
une1) Construction d'un ensemble partiel, comprenant un premier élément en caoutchouc non vulcanisé, de préférence une première plaque en caoutchouc non vulcanisé, et au moins un cordon de traction disposé sur l'élément en caoutchouc non vulcanisé,
a2) Application du vernis durcissable aux rayonnements, de préférence durcissable aux UV, sur au moins un cordon de traction disposé sur le premier élément en caoutchouc non vulcanisé, de préférence par pulvérisation ou par trempage,
b) durcissement partiel du vernis durcissable aux rayonnements, de préférence durcissable aux UV, par rayonnement, de préférence par irradiation UV pour fixer au moins un brin de traction sur le premier élément en caoutchouc non vulcanisé,
c) Construction de l'ensemble, comprenant l'ensemble partiel créé à l'étape a1) avec au moins un cordon de traction recouvert de la peinture partiellement durcie conformément aux étapes a2) et b) et un deuxième élément en caoutchouc non vulcanisé, de préférence une deuxième plaque de caoutchouc non vulcanisé disposée sur au moins un cordon de traction recouvert de la peinture partiellement durcie,
d) Insertion de l'agencement dans le moule, si nécessaire après avoir coupé l'agencement à une taille appropriée, lorsque le moule a de préférence une surface profilée,
e) vulcanisation de l'agencement dans le moule par traitement thermique et, si nécessaire, sous pression, vulcanisation des premier et deuxième éléments en caoutchouc et durcissement thermique de la peinture partiellement durcie,
f) Retirer l'ensemble du moule afin d'obtenir l'article en élastomère après post-traitement de l'ensemble retiré, si nécessaire.

11. Procédé selon la revendication 10, dans lequel le premier élément en caoutchouc non vulcanisé est une première plaque en caoutchouc non vulcanisé et le second élément en caoutchouc non vulcanisé est une seconde plaque en caoutchouc non vulcanisé, et dans lequel
à l'étape (A1), l'ensemble partiel est construit en plaçant la première plaque de caoutchouc non vulcanisée sur un tambour, de préférence un tambour rotatif, et en enroulant la première plaque de caoutchouc non vulcanisé sur la première plaque de caoutchouc non vulcanisé,
à l'étape a2) le vernis durcissable aux rayonnements, de préférence durcissable aux UV, est appliqué sur au moins un cordon de traction disposé sur la première plaque de caoutchouc non vulcanisée, de préférence par pulvérisation,
à l'étape b) le vernis durcissable aux rayonnements, de préférence durcissable aux UV, est partiellement durci par irradiation, de préférence par irradiation UV, afin de fixer au moins un brin de traction sur la première plaque de caoutchouc non vulcanisée,
À l'étape c), la construction de l'ensemble comprend le placement de la deuxième plaque en caoutchouc sur au moins un cordon de tension fixé avec la peinture partiellement durcie.

12. Article en élastomère comprenant un corps en caoutchouc vulcanisé et au moins un élément de résistance choisi dans un corps de surface textile et un élément de traction, dans lequel l'élément de résistance est recouvert d'un vernis durci, dans lequel le vernis est un vernis durcissable, de préférence durcissable aux UV, comprenant un liant et un photo-initiateur, dans lequel l'article en élastomère est obtenu de préférence par un procédé selon l'une des revendications 1 à 11.

13. Article en élastomère selon la revendication 12, dans lequel le vernis durci est formé par pré-durcissement partiel du vernis durcissable par rayonnement, de préférence durcissable aux UV, au moyen d'une irradiation, de préférence d'une irradiation UV, et d'un durcissement thermique ultérieur.

14. Article en élastomère selon la revendication 12 ou 13, dans lequel
le liant et/ou le photoinitiateur tel que défini dans la revendication 2, et/ou
le vernis durcissable par rayonnement, de préférence durcissable aux UV tel que défini dans la revendication 3, et/ou
les éléments de résistance tels que définis dans la revendication 4, et/ou
l'article en élastomère tel que défini dans la revendication 6 ou 7.

15. Utilisation d'un vernis durcissable aux rayonnements, de préférence durcissable aux UV, dans un article en élastomère comprenant un corps en caoutchouc vulcanisé et au moins un élément de résistance choisi dans un corps de surface textile et un cordon de traction pour recouvrir le support de résistance.
